# EUROPÄISCHE PATENTSCHRIFT

(11) **EP 0 794 320 B1**
(45) Veröffentlichungstag und Bekanntmachung des Hinweises auf die Patenterteilung: **19.11.2003**
(21) Anmeldenummer: 97890041.3
(22) Anmeldetag: 06.03.1997
(51) Int. Cl.: F01K 7/22, F01K 23/10

(54) **Vorrichtung und Verfahren zur Energieerzeugung**
Apparatus and process for the production of energy
Dispositif et procédé pour la production d'énergie

(30) Priorität: 08.03.1996 AT 44296
(43) Veröffentlichungstag der Anmeldung: 10.09.1997
(73) Patentinhaber: Beckmann, Georg, 1090 Wien (AT); Beckmann, Martina, 1090 Wien (AT)
(72) Erfinder: Beckmann, Georg, Dr. Dipl.-Ing., 1120 Wien (AT)
(74) Vertreter: Grabherr, Claudia, Dipl.Ing.

(56) Entgegenhaltungen:
- DE-A- 3 817 713
- DE-B- 1 003 755
- DE-B- 1 018 431
- DE-C- 19 527 537
- GB-A- 246 593
- GB-A- 463 075

## Beschreibung

Die Erfindung betrifft eine Vorrichtung zur Energieerzeugung unter Nutzung von Wärme aus einem heißen Fluid mit einem von dem heißen Fluid durchströmten Wärmetauscher, der eine Vorwärmer- und/oder Economiserheizfläche und eine Verdampfer- sowie gegebenenfalls eine Überhitzerheizfläche aufweist, durch die als Arbeitsmedium Wasser strömt, mit Dampf- und Speisewasserleitungen zum Zuführen von Dampf aus dem Wärmetauscher zu einem Energiewandler mit einer oder mehreren Expansionsmaschinen und zum Rückführen von aus dem Energiewandler austretendem Dampf bzw. daraus kondensiertem Wasser zum Wärmetauscher und mit mindestens einem Zwischenüberhitzer zur Überhitzung des noch nicht vollexpandierten Dampfes, wobei ein Heißwasserkreislaufsystem mit Heißwasservorlauf- und Kaltwasserrücklaufleitungen und eine im Wärmetauscher angeordnete Heizfläche vorgesehen ist und das Heißwasserkreislaufsystem mit dem außerhalb des Wärmetauschers angeordneten Zwischenüberhitzer verbunden ist, sowie ein Verfahren zur Energieerzeugung unter Nutzung von Wärme aus einem heißen Fluid, wobei die Wärme in einem von dem heißen Fluid durchströmten Wärmetauscher auf ein eine Vorwärmer- und/oder Economiserheizfläche, eine Verdampfer- sowie gegebenenfalls eine Überhitzerheizfläche durchfließendes Arbeitsmedium übertragen wird und dieses verdampft, der so entstandene (Haupt)dampf einem Energiewandler mit einer oder mehreren Expansionsmaschine(n) zugeführt und dort expandiert wird und der teilexpandierte Dampf mindestens einmal zwischenerhitzt wird, wobei für die Zwischenerhitzung Wasser durch Wärmeübertragung im Wärmetauscher erhitzt wird und über ein Heißwassersystem einem Zwischenüberhitzer zur Wärmeübertragung an den teilexpandierten Dampf zugeleitet wird. Solche Vorrichtungen zur Krafterzeugung und/oder zur gekoppelten Kraft-Wärme-Erzeugung mit Hilfe eines Kreislaufes mit verdampfendem Arbeitsmedium (vorzugsweise Wasser/Dampf), bestehen gemäß dem Stand der Technik im wesentlichen aus dem Abhitzedampferzeuger mit Wärmetauscherheizflächen, und zwar mindestens einem Economiser, mindestens einem Verdampfer (im Fall der unterkritischen Prozeßführung) und gegebenenfalls einem oder mehreren Überhitzern, einem oder mehreren Expansionsmaschinen, gegebenenfalls einer oder mehreren Wärmeauskopplungen sowie mindestens einem Kondensator als Wärmesenke, und mindestens einer Speisepumpe, um den Kreislauf des Arbeitsmediums zu schließen.

Bei der Nutzung der fühlbaren Wärme aus (im wesentlichen einphasigen) Fluiden (vorzugsweise Heißgasen), z.B. aus Verbrennungskraftmaschinen, industriellen Abwärmeprozessen, etc., zur Kraft- und Wärmeerzeugung, steht man vor dem Problem, nicht nur den thermischen Wirkungsgrad des Kreisprozesses (= mechanische oder elektrische Energie, bezogen auf die dem Kreisprozess zugeführte thermische Energie) zu maximieren, sondern es ist auch das Heißgas soweit abzukühlen, daß dem Kreisprozeß genügend thermische Energie zugeführt werden kann. Zu optimieren ist also das Produkt aus dem thermischen Wirkungsgrad und der zugeführten thermischen Energie, wobei beide Faktoren gegenläufig sind (z.B. kann eine starke Abkühlung mit einem niederen Arbeitsdruck des Arbeitsmediums erreicht werden, wodurch aber der thermische Wirkungsgrad sinkt). Abgesehen von diesen thermodynamischen Gegebenheiten sind Probleme baulicher, kostenmäßiger und betrieblicher Art mit zu berücksichtigen.

Zur Lösung der o.g. Problematik sind gemäß dem Stand der Technik viele Kreisprozesse vorgeschlagen und ausgeführt worden. Einige werden nachstehend kurz beschrieben.

Z.B. sind Mehrdruckprozesse mit dem Arbeitsmedium Dampf/Wasser bekannt. Ausgehend vom Zweidruckprozess, bei welchem sich das heiße Fluid zunächst am Hochdruckteil der Dampferzeugung abkühlt und die erwünschte weitere Abkühlung im Niederdruckteil des Dampferzeugers erfolgt, haben sich Prozesse mit drei oder sogar noch mehreren Druckniveaus herausgebildet, wobei - um die bei den hohen Ausgangsdrücken auftretende Dampfnässe bei der Expansion zu vermeiden - die (einfache) Zwischenüberhitzung angewandt wird; dabei wird der "kalte" Zwischenüberhitzungsdampf aus der Turbine zum Dampferzeuger zurückgeführt, im Dampferzeuger in Zwischenüberhitzerheizflächen mit Hilfe des heißen Fluides aufgeheizt und zur Turbine zurückgeführt. Besonders bei Kraftwerksprozessen mit Gasund Dampfturbinen wird der Prozeß mit drei Druckniveaus der Dampferzeugung und einer Zwischenüberhitzung heute als thermodynamische Bestlösung angesehen. Nachteilig ist dabei der hohe Aufwand (drei Drucksysteme mit eigenen Heizflächen und Dampftrommeln, hoher Heizflächenbedarf), die Vielzahl und die hohen Nennweiten der Rohrleitungen zwischen dem Abhitzekessel und der Expansionsmaschine sowie die Vielzahl der Zylinder der Expansionsmaschine (Hoch-, Mittel- und Niederdruckzylinder bei Dampfturbinen oder bei Dampfmaschinen). Durch diese Verkomplizierungen bleibt diese thermodynamisch optimale Lösung einfacheren Anwendungsfällen, wie z.B. beim Energierückgewinn in industriellen Abhitzeprozessen, verschlossen, so daß dort einfachere Prozesse mit geringeren Wirkungsgraden Anwendung finden.

Bei stark fluktuierenden Abhitzequellen sind hingegen Eindruckprozesse mit hohem Speichervermögen bekannt geworden. Bei diesem System wird die Dampftrommel als Pufferspeicher genutzt, um trotz des fluktuierenden oder gar stoßweisen Anfalls von Abhitze eine geglättete Kraft- und Wärmeerzeugung zu ermöglichen. Nachteilig sind die geringen Dampfparameter (u.U. Sattdampfbedingungen bei niedrigem Druckniveau) und damit die geringen Wirkungsgrade, vielfach wird überhaupt auf eine Stromerzeugung verzichtet und nur (Prozeß-)Wärme bereitgestellt.

Die GB 463 075 A zeigt ein System, bei dem Speisewasser in einem Economiser erwärmt wird, in einer Dampftrommel weiter erwärmt und zum Teil als Heißwasser einem Zwischenerhitzer und zum anderen Teil nach dem Verdampfen als Dampf einem Überhitzer zugeleitet wird. Der den Überhitzer verlassende, überhitzte Dampf wird der ersten Expansionsmaschine zugeleitet, der Dampf nach der Expansion im Zwischenüberhitzer erhitzt und einer zweiten Expansionsmaschine zugeführt. Das aus dem Zwischenüberhitzer austretende Wasser wird zum Economiser zurückgeführt.

Die Erfindung hat sich zur Aufgabe gestellt, die gesamten Nachteile zu vermeiden und die Abwärme des Fluids im Wärmetauscher noch besser zu nutzen und erfindungsgemäß ist die eingangs genannte Vorrichtung dadurch gekennzeichnet, daß die Vorwärmer- und/oder Economiserheizfläche, die Verdampferheizfläche und die Heizfläche des Heißwasserkreislaufsystems durch eine gemeinsame Heizfläche gebildet werden.

Für das eingangs genannte Verfahren gilt erfindungsgemäß, daß die Beheizung des teilexpandierten Dampfes bei einer Dampftemperatur durchgeführt wird, die unterhalb der Arbeitsmediumtemperatur am Pinch-Point (Temperaturannäherung Fluidtemperatur - Arbeitsmediumtemperatur) liegt.

Die für diese Art der Zwischenüberhitzung notwendigen Rohrleitungen sind bei der erfindungsgemäßen Vorrichtung wesentlich kostengünstiger u. platzsparender, da Heißwasser mit geringen Drücken zur Zwischenüberhitzung verwendet werden kann und Heißwasser eine wesentlich höhere (Energie-)Dichte als Heißdampf aufweist.

Besonders hervorzuheben ist, daß bei der vorliegenden Erfindung Wirkungsgradgewinne nicht durch eine teure, komplizierte und schwer zu handhabende Technologie sondern durch eine einfache, überschaubare Technik erzielt werden. Weiters handelt es sich bei der Erfindung nicht um die maßgeschneiderte Lösung für ein singuläres Problem, sondern es eröffnet sich ein breites Anwendungsfeld. In der nachstehenden Beschreibung werden einige Ausführungsbeispiele formuliert und durch Figuren erläutert. Am Ende der Beschreibung sind tabellarisch Anwendungsbeispiele angeführt; daraus ist ersichtlich, daß diese Technologie ein hohes Replikationspotential aufweist.

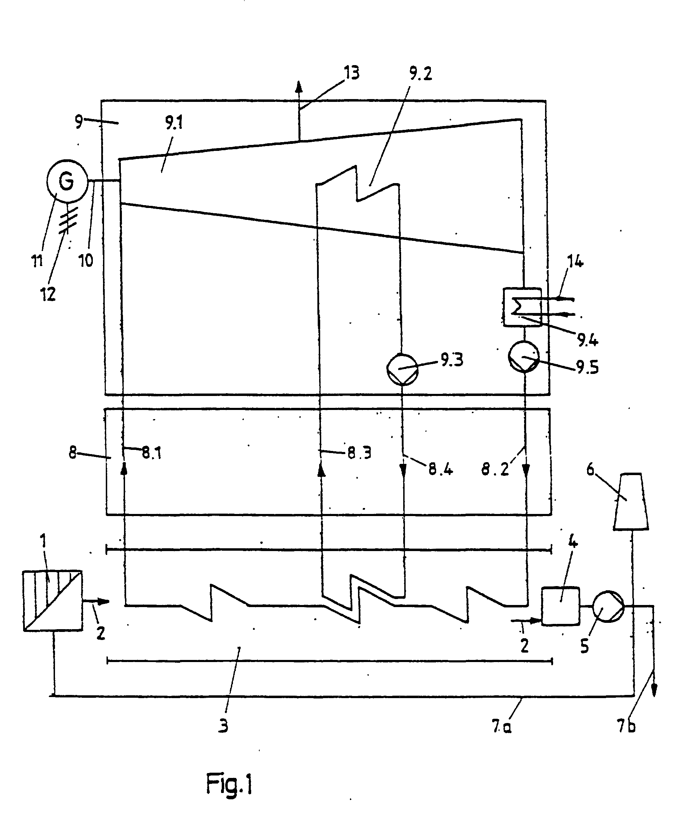

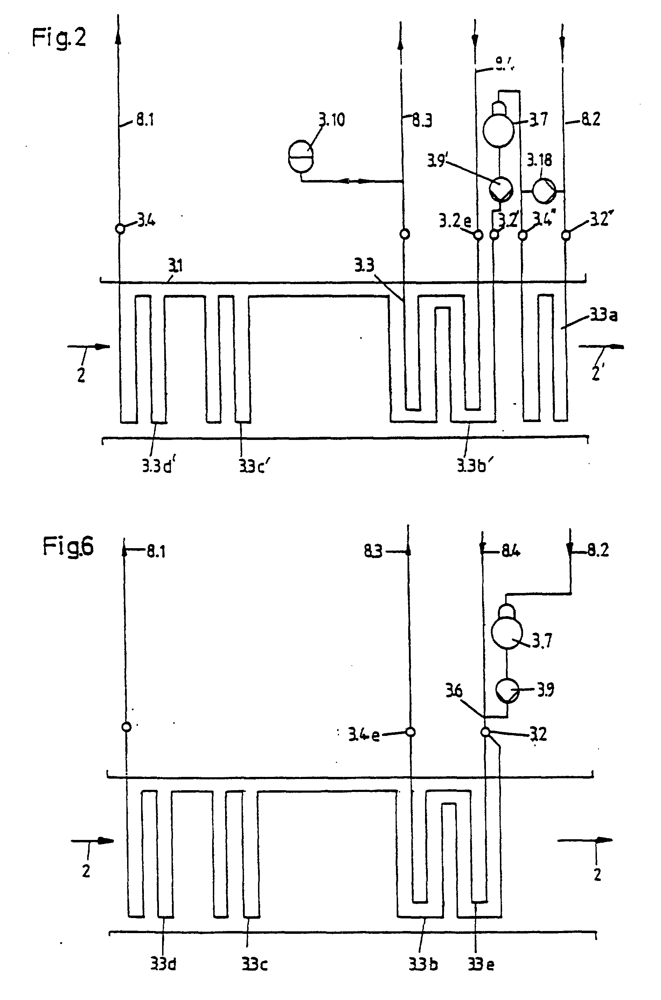

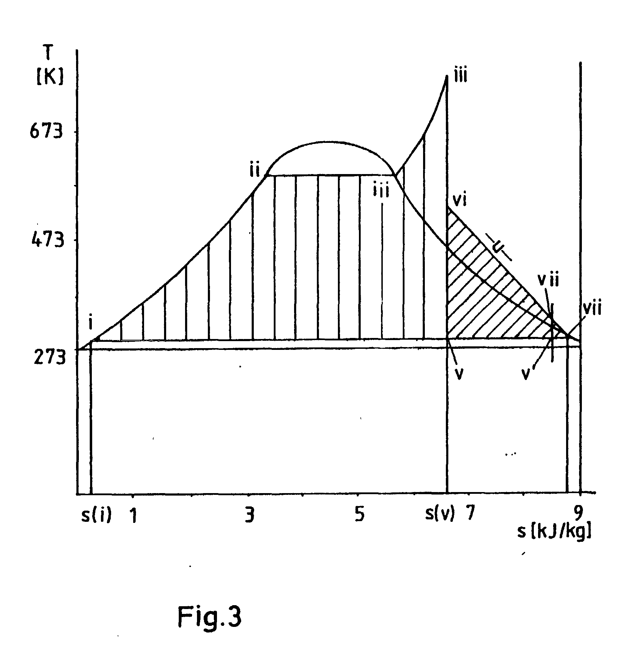

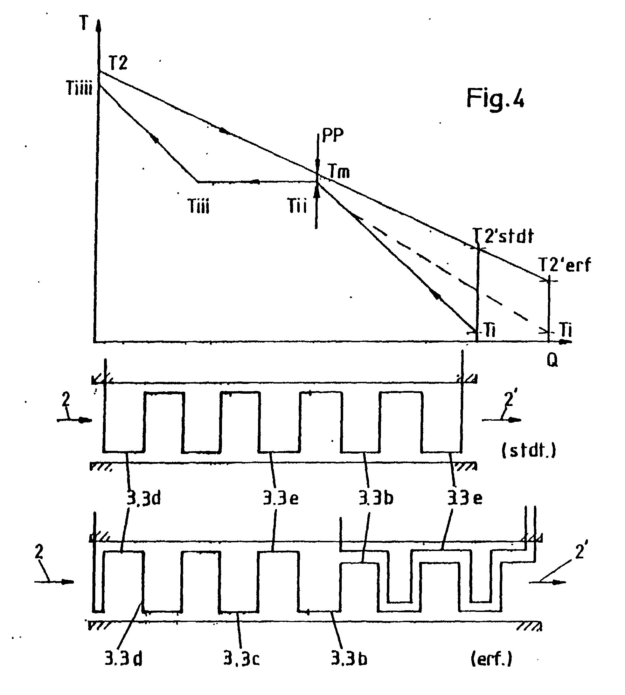

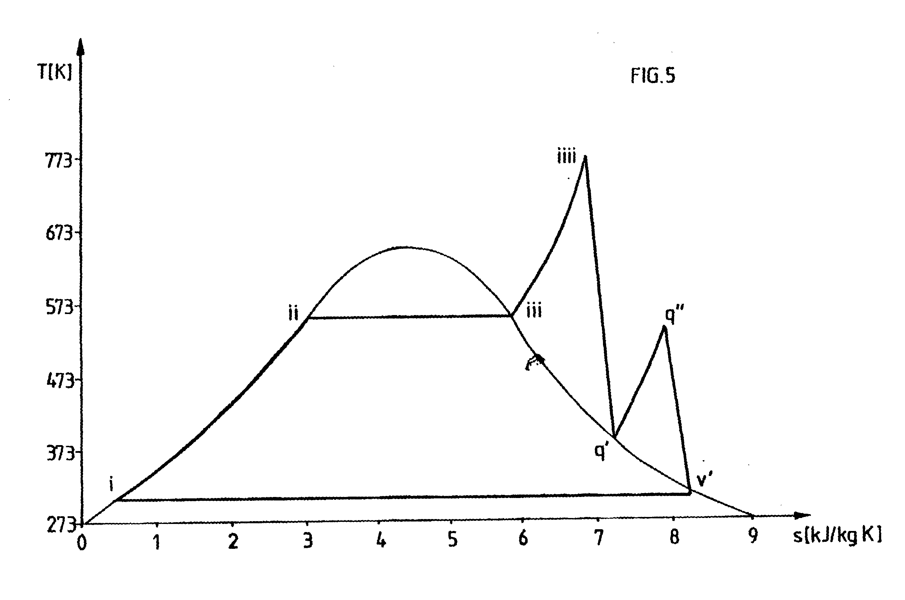

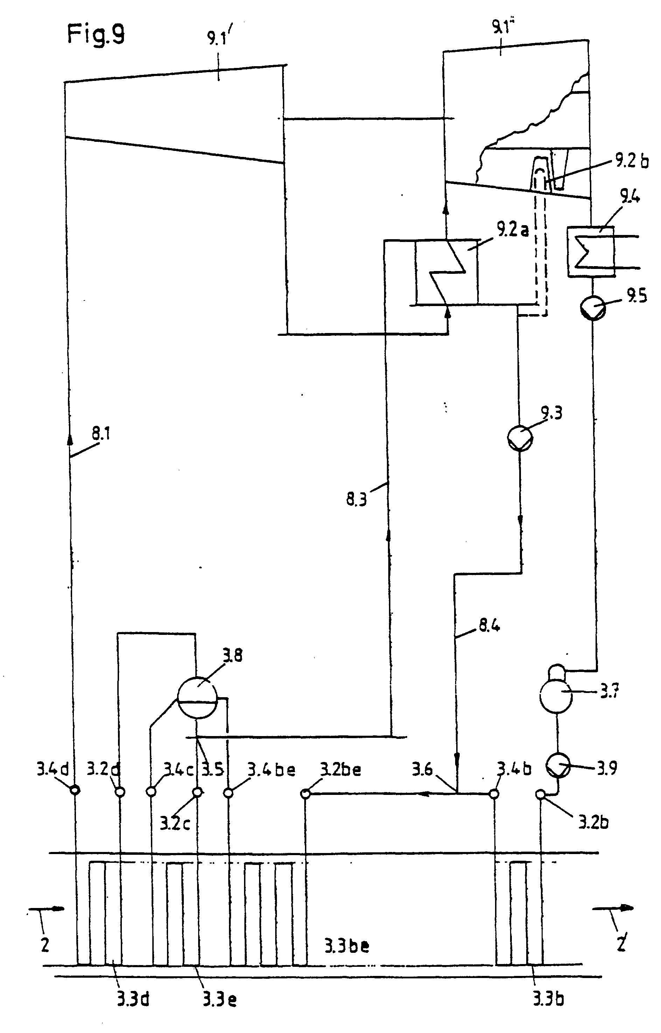

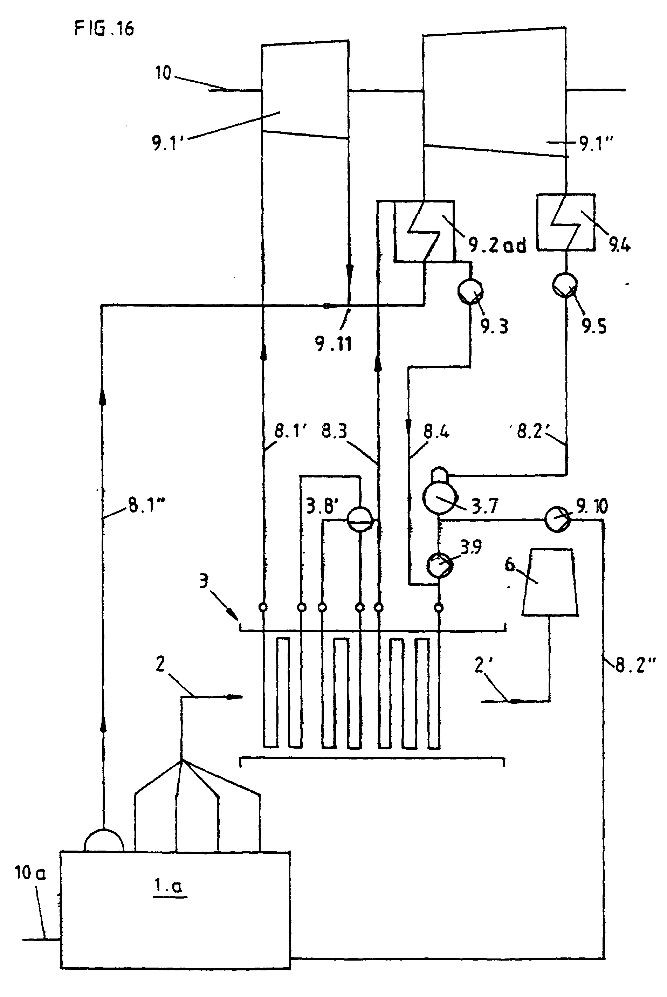

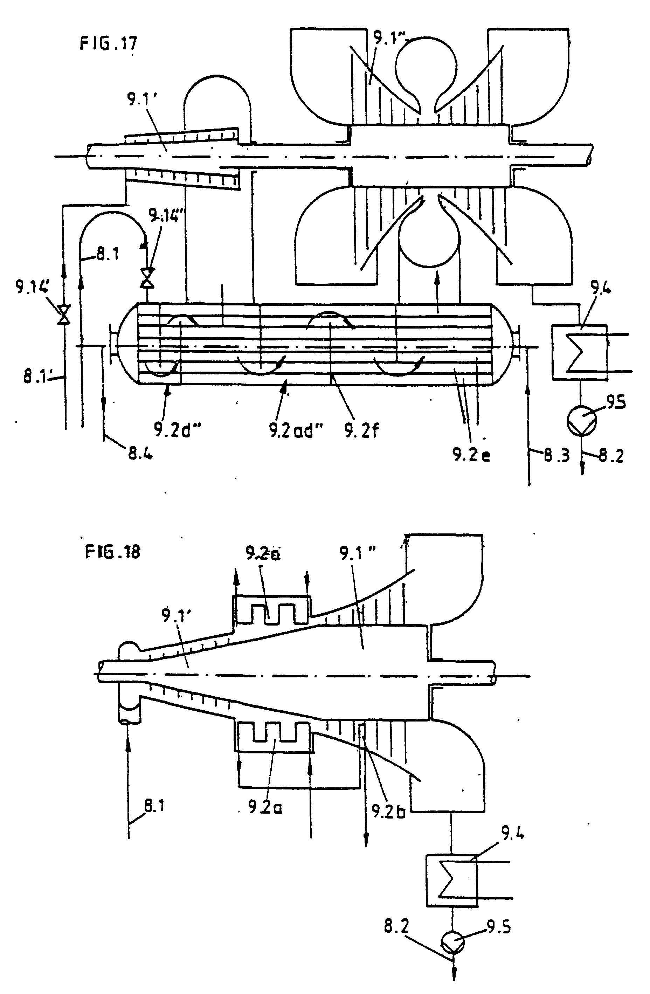

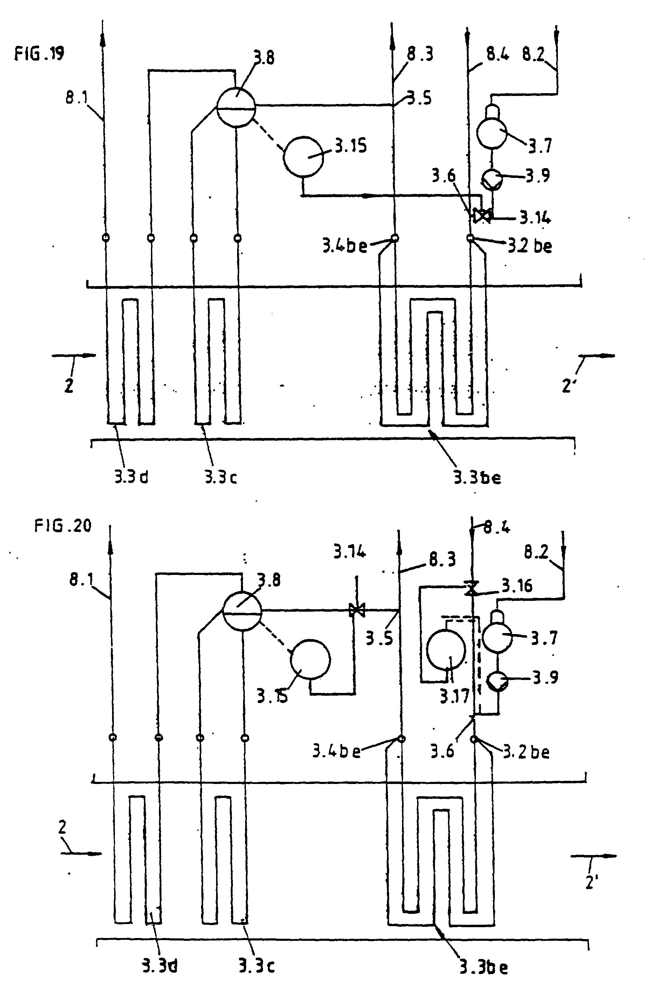

Die Fig. 1 zeigt schematisiert eine erfindungsgemäße Vorrichtung; Fig. 2 zeigt eine möglich Ausgestaltung der Vorrichtung im Bereich des Wärmetauschers; Fig. 3 zeigt ein T/s-Diagramm, in dem die Arbeitsmediumtemperatur gegen die Entropie des Arbeitsmediums aufgetragen ist, für das Verfahren gemäß der Erfindung gegenüber einem Verfahren nach dem Stand der Technik; Fig. 4 zeigt ein T/Q-Diagramm, bei dem die Arbeitsmediumtemperatur gegen die an das Arbeitsmedium abgegebene Wärmemenge aufgetragen ist. Zusätzlich ist der Temperaturverlauf der Fluids eingezeichnet. Fig. 5 zeigt ein T/s-Diagramm mit einer Zwischenerhitzung gemäß der Erfindung. Die Fig. 6 bis 8, 10, 19 und 20 zeigen verschiedene Ausführungsvarianten des Wärmetauscherbereiches, die Fig. 9, 11 bis 14 und 16 zeigen Varianten der erfindungsgemäßen Vorrichtung mit verschiedenen Ausführungen des Wärmetauscherbereiches sowie des Energiewandlerbereiches. Fig. 15 zeigt eine weitere Ausführungsmöglichkeit für den Energiewandler. Die Fig. 17 und 18 zeigen zwei apparatemäßige Ausführungsvarianten für den Energiewandler mit integriertem Zwischenüberhitzer und die Fig. 19 und 20 zwei weitere Varianten der Erfindung.

Fig. 1 zeigt stark vereinfacht das Grundprinzip des Erfindungsgedankens: Die (Ab-) Wärmequelle - 1 - liefert heißes Fluid - 2 - (in der Regel Heißgas); dieses wird in einem Wärmetauscher - 3 - abgekühlt, und zwar an Heizflächen, die von einem Arbeitsmedium (in der Regel Wasser/Dampf) durchflossen werden, wobei dieses Arbeitsmedium Wärme aufnimmt. Die Abkühlung des Heißgases erfolgt in Zonen mit verschiedenen Heizflächen, (z. B. in der Überhitzerheizfläche, in der Verdampferheizfläche, in der Economiserheizfläche, in der Vorwärmerheizfläche), jeweils mit einem oder mehreren Druckniveaus. Das abgekühlte Heißgas verläßt als Kaltgas 2' den Wärmetauscher - 3 - und wird, gegebenenfalls unter Zwischenschaltung einer Gasbehandlungsanlage - 4 - , über einen Kamin oder eine Auspuffanlage - 6 - an die Umgebung abgegeben (z.B. im Fall der Abgasnutzung aus Verbrennungskraftmaschinen) oder wird gänzlich oder teilweise, gegebenenfalls über ein Gebläse - 5 -, über eine Leitung 7a rezirkuliert, d.h. der Wärmequelle - 1 - wieder zugeführt (z.B. im Fall des gasgekühlten Hochtemperatur-Reaktors oder auch im Fall eines Schüttgutkühlers, z.B. zum trockenen Kühlen von Glühkoks aus Kokereien oder dergleichen) oder auch - über eine Leitung 7 b - einer weiteren Verwendung zugeführt (z.B. im Fall der nachgeschalteten Verbrennung von gekühlten Brenngasen).

Im Gegensatz zu herkömmlichen Dampferzeugern, die nur Dampf oder Dämpfe mit verschiedenen Druckniveaus erzeugen oder bereitstellen wird erfindungsgemäß auf der wärmeaufnehmenden Seite sowohl Dampf oder Dampfmengen mit verschiedenen Dampfparametern als auch Heißwasser oder Heißwassermengen mit verschiedenen Temperaturniveaus erzeugt, wobei erfindungsgemäß gegebenenfalls die Aufheizung des Heißwassers in einer Zone erfolgt, in welcher das für die Dampferzeugung zugeordnete Speisewasser in Temperaturspanne und -höhe gleiche oder ähnliche Temperaturverhältnisse aufweist. Diese Kennzeichen werden nachfolgend beispielhaft detailliert. Die besagten Dampfmengen und Heißwassermengen werden über ein Bündel von Energietransportleitungen - 8 - dem Energiewandler - 9 - zugeführt, welcher die thermische Energie der besagten Stoffströme in mechanische Energie wandelt und über eine mechanische Welle - 10 - einen Generator - 11 - antreibt, welcher die mechanische Energie in elektrische Energie umwandelt und über elektrische Stromleitungen - 12 - zur Verfügung stellt und gegebenenfalls Nutzwärme über Wärmeauskopplungsleitungen - 13 - an Wärmeverbraucher überführt und die nicht mehr nutzbare Wärme des Kondensators - 9.4 - als Umgebungswärme über Leitungen - 14 - einer Ab-Wärmesenke abführt. Dabei leistet der Dampf oder die Dampfmengen - welcher bzw. welche über eine bzw. mehrere Dampfleitungen geliefert wird bzw. werden - in einer Expansionsmaschine - 9.1 - mechanische Arbeit, während das Heißwasser oder die Heißwassermengen - welches bzw. welche über eine bzw. mehrere Heißwasservorlaufleitungen - 8.3 - zur Verfügung gestellt wird bzw. werden - über Oberflächenwärmetauscher - 9.2 - an fluiden Medien, insbesondere an bereits expandierten Dampfmengen, oder auch am Fernwärmewasser einer Fernwärmeauskopplung eine Wiederaufheizung vollzieht und das "kalte" Rücklaufwasser über die Rezirkulationspumpe - 9.3 - und die Kaltwasserrücklaufleitung(en) - 8.4 - dem Wärmetauscher - 3 - zurückgespeist wird. Die Gesamtheit, bestehend aus der Heißwasservorlaufleitung - 8.3 - , dem Oberflächenwärmetauscher - 9.2 - innerhalb des Energiewandlers - 9 -, der Rezirkulationspumpe - 9.3 -, der Kaltwasserrücklaufleitung - 8.4 - und der Wärmetauschfläche zur Aufheizung innerhalb des Wärmetauschers - 3 - und wird als Schleife oder als Heißwasserkreislauf bezeichnet. Der expandierte Abdampf aus der Expansionsmaschine - 9.1 - wird im Kondensator - 9.4 - niedergeschlagen, gegebenenfalls entgast, und als Kondensat mit einer Kondensatpumpe - 9.5 - über die Speisewasserleitung - 8.2 - innerhalb des Bündels der Energietransportleitungen - 8 - dem Wärmetauscher - 3 - wieder zugeführt.

Die Temperatur- und Druckverhältnisse können bei der Vorrichtung gemäß Fig.1 z.B. folgendermaßen sein. Das einströmende Heißgas - 2 - hat eine Temperatur von 520°C und kühlt durch Abgabe der Wärme beim Durchströmen des Wärmetauschers - 3 - auf 145° - 125°C ab. Das Arbeitsmedium Wasser tritt mit 30°C und 80 bar in den Wärmtauscher - 3 - über die speisewasserleitung - 8.2 - ein, wird erhitzt, bei 64 bar und 280°C verdampft und wird mit einer Temperatur von 500°C bei 60 bar über die Dampfleitung - 8.1 - der Dampfturbine - 9.1 - zugeleitet und dort durch Expansion mit einem inneren Turbinenwirkungsgrad von 85% auf unter 8 bar entspannt, wobei die Dampftemperatur auf unter 270°C absinkt. Ab diesem Expansionspunkt oder darunter wird dem teilexpandierten Dampf Wärme über den Heißwasserkreislauf zugeführt, so daß nach der Expansion auf 0,04 bar diese im Naßdampfgebiet, aber in der Nähe der Sattdampflinie endet. Der Naßdampf wird dem Kondensator - 9.4 - zugeleitet und das aus dem Kondensator austretende Speisewasser wird durch die Kondensatpumpe wieder dem Wärmetauscher zugeführt, wobei dieses die anfangs genannten Werte für Temperatur und Druck aufweist, d.h. 30°, 80 bar.

Das im Heißwasserkeislauf befindliche Wasser wird im Wärmetauscher - 3 - auf 280°C aufgeheizt und hat einen Druck von 64 bar oder darüber. Über die Heißwasservorlaufleitung - 8.3 - wird es dem Zwischenüberhitzer - 9.2 - zugeführt, gibt dort Wärme ab und wird dabei auf 125 bis 60°C abgekühlt und von der Rezirkulationspumpe - 9.3 - und über die Kaltwasserrücklaufleitung - 8.4 - wieder dem Wärmtauscher - 3 - zugeführt.

Nach dieser grundsätzlichen Erläuterung soll zunächst - anhand einer beispielhaften Ausführung - das Prinzip detaillierter erklärt werden. Fig. 2 zeigt eine auf der Seite des Wärmetauschers einfache Schaltung; der dampferzeugende Teil ist ein Durchlaufkessel. Der Energiewandler ist hier nicht dargestellt und kann z.B. wie in Fig. 1 aufgebaut sein.

Beginnend mit dem Kondensat aus der Speisewasserleitung - 8.2 - tritt dieses über den Eintrittssammlern - 3.2''- in den Vorwärmer - 3.3.a - ein und wird über den Austrittssammler - 3.4 " - einem Entgaser - 3.7 - zugeführt, in dem die restlichen im Kondensat gelösten Gase entfernt werden; zwischen dem Austrittsammler und dem Eintrittsammler wird - um Taupunktsprobleme zu vermeiden - gegebenenfalls eine Umwälzpumpe - 3.18 - installiert, um die Wassertemperatur am kalten Ende des Vorwärmers - 3.3.a - anzuheben. Die Beheizung des Entgasers - 3.7 - kann auf verschiedene weise erfolgen - z.B. durch eine Dampfmenge aus dem Wämetauscher oder eine Anzapfdampfmenge aus der Expansionsmaschine; auch der Betrieb kann auf verschiedene Weise erfolgen, z.B. im Unterdruckbetrieb oder bei leichtem Überdruck, z.B. bei 1,5 bar und 111°C. Über eine Speisewasserpumpe - 3.9'- gelangt das nun entgaste Speisewasser über den Eintrittssammler - 3.2'- zunächst in den Economiser - 3.3.b'- dann in den Verdampfer - 3.3.c'- und schließlich in den Überhitzer - 3.3.d' - zum Austrittssammler - 3.4' - und wird - in Form eines überhitzten Frischdampfes - über die Dampfleitung - 8.1 - dem Energiewandler zur Verfügung gestellt. Das Heißgas - 2 - wird zu den erwähnten Heizflächen - 3.3 - vorwiegend in Gegenstrom geführt, wobei sich dieses Heißgas zum Kaltgas - 2' - abkühlt.

Der Frischdampf expandiert im Hochdruckzylinder - 9.1'- der Expansionsmaschine (siehe Fig. 1); die Zwischenüberhitzung der expandierten Dämpfe erfolgt über den zwischenüberhitzer - 9.2 - , welcher sekundärseitig über die Heißwasservorlaufleitung - 8.3 - mit Heißwasser versorgt wird. Dieses Heißwasser wird in einer eigens im Heißgasschacht - 3.1 - angeordneten Heizfläche - 3.3.e - für das Heißwasserkreislaufsystem aufgeheizt, wobei diese mit den Economiser - 3.3.b'- des dampferzeugenden Teils parallelgeschaltet ist und nicht nur auf der wärmeabgebenden Heißgasseite sondern auch auf der wärmeaufnehmenden Wasserseite gleiche Temperaturverhältnisse wie diese aufweist. Der Heißwasserkreislauf selbst weist eine Druckhaltung durch einen Expansionsbehälter - 3.10 - auf. Das im Zwischenüberhitzer - 9.2 - abgekühlte Heißwasser wird als Kaltwasser über die Rezirkulationspumpe - 9.3 - und die Kaltwasserrücklaufleitung - 8.4 - dem Eintrittssammler - 3.2.e - der Heizfläche - 3.3.e - für das Heißwasserkreislaufsystem zugeführt.

Da bei diesem Ausführungsbeispiel der Heißwasserkreislauf völlig getrennt vom übrigen Dampf- oder Wasserkreislauf ist, kann der Heißwasserkreislauf auch mit einem anderen flüssigen Wärmeträgermedium, wie z.B. Thermoöl oder geschmolzene eutektische Salzgemische betrieben werden, ohne den Bereich der Erfindung zu verlassen.

Der thermodynamische Effekt der erfindungsgemäßen Schaltung ist aus dem kombiniertem Diagramm T/s - T/Q, gemäß Fig. 3 und Fig. 4, ersichtlich. Um die Vorteile und Unterschiede gegenüber dem Stand der Technik zu erläutern ist es erforderlich, auch den konventionellen Kreisprozess in diese Diagramme einzuzeichnen.

Ohne Heißwasserkreislauf stellt sich der nach CLAUSIUS und RANKINE benannte konventionelle Kreisprozeß, wie folgt, dar: In Figur 3 (T/s-Diagramm) ist ein einfacher Eindruckprozeß idealisiert dargestellt: das Kondensat/Speisewasser wird vorgewärmt (Linie i - ii), verdampft (Linie ii - iii) und überhitzt (Punkte iii - iiii); der überhitzte Dampf expandiert in einer (idealen) Expansionsmaschine bis in das Naßdampfgebiet (Linie iiii - v), wobei über die Kondensation (Linie v - i) und die Speisepumpenförderung der Kreislauf geschlossen wird. Gemäß den Regeln der Thermodynamik wird dabei (pro 1 kg Wasser/Dampf) jene Wärme zugeführt, die der Fläche s(i) - i - ii - iii - iiii - v - s(v) entspricht; die theoretisch (maximal gewinnbare) mechanische Energie entspricht jedoch der vertikal schraffierten Fläche i - ii - iii - iiii - v, woraus sich als Verhältniszahl zwischen der mechanischen gewinnbaren und der thermischen zugeführten Energie der Wirkungsgrad (welcher deutlich unter 100 % liegt) ergibt.

In der Figur 4 (T/Q-Diagramm) ist die Arbeitsmedium-Temperatur über die an das Arbeitsmedium abgegebene, übertragene Wärmemenge Q aufgetragen; weiters ist die Temperatur des Heißgases, welche mit T2 beginnt, als Linienzug eingezeichnet. Die Heißgastemperatur nimmt ab, wenn das Heißgas Wärme an das Arbeitsmedium abgibt (im Fall einer konstanten spezifischen Wärme des Heißgases ist diese Abkühllinie eine Gerade). Da für das Übertragen von Wärme stets ein endliches Temperaturgefälle, und zwar in Richtung der Wärmeübertragung, erforderlich ist, kann in dem gezeigten Fall des Standes der Technik die Gasabkühlung nur bis zu einer Endtemperatur T2'stdt erzielt werden. Wenn man bezüglich der Temperaturen, Drücke und Turbinenwirkungsgrade die gleichen Werte zugrundelegt, wie dies zur beispielsweisen Erläuterung der Fig. 1 erfolgt, so ergibt sich eine Endtemperatur T2'stdt von 170 bis 180°C, so daß das Abgas einen nennenswerten Betrag an ungenutzer Wärme aufweist. Zur weiteren Erläuterung ist unterhalb dieses Diagrammes der Abhitzekessel gemäß dem Stand der Technik - symbolisiert als Durchlaufkessel - im Teilbild (stdt) wiedergegeben.

Das kleinste Temperaturgefälle tritt im gezeigten Fall zwischen der Temperatur zwischen dem Punkt des Verdampfungsanfanges Tii und der an dieser Heizfläche herrschenden Gastemperatur Tm auf. In der Praxis ist diese als Pinch Point PP genannte Temperaturdifferenz (=Tm-Tii) 7 bis 25 Grad, üblicherweise 10 Grad. Da dieser Pinch Point die Heizflächenauslegung des Economisers und des Verdampfers beeinflußt, ist sein Wert eine wichtige Auslegungsgröße bei Abhitzekesseln. Auch bei einer überkritischen Prozeßführung gibt es einen Pinch Point, und zwar an der Stelle des engsten Parallelabstandes zwischen der Gaslinie und der Vorwärmung des Arbeitsmediums.

Erfindungsgemäß stellt sich der Prozeß hingegen in der Fig. 3 wie folgt dar: Bei sonst gleichen Verhältnissen wird die Expansion bis zu einem Punkt - vi -, welcher sich unter der Arbeitsmediumtemperatur am Pinch Point, vorzugsweise aber oberhalb der Sattdampflinie befindet, geführt, dann wird aber dem expandierenden Dampf Wärme zugeführt, so daß die Expansion beim Punkt - vii - endet. Wie aus der Thermodynamik bekannt, kann eine Prozeßführung idealisiert - über unendlich viele Schritte der Wärmezufuhr geschehen oder real über einen oder wenige Schritte der Wärmezufuhr. In der Fig. 3 ist der Fall der idealisierten Prozeßführung mit unendlich vielen Schritten der Wärmezufuhr (kontinuierliche Wärmezufuhr) - gemäß dem Linienzug - u - dargestellt. Der zusätzliche Gewinn an mechanischer Arbeit ist durch die schräg schraffierte Fläche - vi-vii-v - dargestellt, welche sich zu der Fläche des konventionellen CLAUSIUS-RANKINE-Prozes-ses - i-ii-iii-iiii-v - dazuaddiert. Zu diesem idealisierten Prozeß sind die Gasabkühlverhältnisse im T/Q-Diagramm der Fig. 4 dargestellt. Man erkennt, daß die zusätzliche erforderliche Wärmezufuhr aus dem erfindungsgemäßen Wärmetauscher gedeckt werden kann, wobei sich das Abgas stärker abkühlt - und zwar auf den Punkt T2'erf - als im ersten, dem Stand der Technik entsprechendem Fall. Dies ist dadurch zu erreichen, weil die zusätzliche Wärme - wie die Vorwärmung für die Dampferzeugung - temperaturgleich und parallel zueinander aus dem Abgasstrom ausgekoppelt werden, wodurch die strichlierte Aufheizlinie im T/Q-Diagramm die deckungsgleiche Aufheizlinie für die Speisewasservorwärmung und die Aufheizung des Wassers des Heißwasserkreislaufes darstellt und wesentlich flacher verläuft als die Vorwärmlinie im konventionellen Fall. Der Energietransport zur Wärmezufuhr erfolgt aber nicht mit einer Vielzahl von hin- und herlaufenden Zwischenüberhitzerleitungen, sondern über das Heißwasserkreislaufsystem, wobei die Wärme in oder bei der Expansionsmaschine an Dämpfe abgegeben wird; die Temperaturdifferenz zwischen dem Medium des Heißwasserkreislaufes und dem Arbeitsmedium beträgt 5 bis 15 Grad, üblicherweise um 10 Grad.

Die Wärmezuführung während der gesamten Expansion gemäß dem Linienzug - u - stellt einen thermodynamischen Sonderfall dar, da hier bis zum tiefstmöglichen Temperaturniveau eine Wärmezufuhr erfolgt. Natürlich kann man mit der Wärmezufuhr früher aufhören,z.B. beim Punkt - vii'-, sodaß der letzte Abschnitt der Expansion von -vii'- auf - v'- ohne Wärmezufuhr erfolgt und in das Naßdampfgebiet eintaucht (was für die anschließende Kondensation Vorteile bringt).

Soweit der idealisierte Prozeß mit einer kontinuierlichen Wärmezufuhr während der Expansion. Real kann man die Schritte: Wärmezufuhr und Expansion trennen und in einer Abfolge vollziehen. Dabei kommt man mit einer einstufigen Zwischenüberhitzung dem Idealprozeß recht nahe. Diese ist im T/s - Diagramm der Fig. 5 gezeigt, wobei der Linienzug - q' - q'' - den Zwischenüberhitzungsschritt und die Linie - q" - v' - den Expansionsschritt darstellen. Legt man bezüglich der Temperaturen, Drücke und Turbinenwirkungsgrade die gleichen Werte zugrunde, wie dies zur beispielsweisen Erläuterung der Fig. 1 erfolgt und unterstellt man bei den verbleibenden Werten üblichen Größen, so durchläuft der Frischdampf folgende Zustände:
- Expansion von 500°C und 60 bar auf 115°C und 1,6 bar
- Zwischenüberhitzung auf 270°C (1,5 bar)
- Endexpansion auf 0,04 bar und eine Dampfnässe von 3%

Es ergibt sich nun eine Endtempereratur T2'erf von 135 bis 145°C, so daß das Abgase um 35 Grad kühler ist als das Abgas aus einem Prozeß gemäß dem Stand der Technik. Die übertragene Wärme ist also - um beim genannten Zahlenbeispiel zu bleiben - um 10% höher als beim Stand der Technik.

Erstaunlicherweise bietet bereits die einstufige Zwischenüberhitzung gegenüber dem Stand der Technik gravierende Vorteile, nicht zuletzt auf Grund der Tatsache, da ihr Expansionsendpunkt - v' - eine niedrigere Dampfnässe aufweist als der Expansionsendpunkt - v - des Prozesses des Standes der Technik, wodurch in der Praxis die Expansion in der Niederdruckstufe mit geringeren Verlusten abläuft. (Anmerkung: Der innere Turbinenwirkungsgrad sinkt bekanntlich um 0,6 bis 2,0%-Punkte, üblicherweise um 1%, wenn die Dampfnässe um 1% zunimmt (die Verhältniszahl dieser Prozente nennt man BAUMANN-Faktor)). Selbst für Fachleute ist überraschend, daß sich die mechanische Leistung der Turbine gegenüber dem Stand der Technik überproportional um 11% erhöht, obwohl die übertragene Wärme "nur" um 10% zugenommen hat, was auf den erwähnten BAUMANN-Faktor (dieser wurde mit 1 angenommen) zurückzuführen ist.

Bei manchen Anwendungsfällen weist das Abgas einen hohen Wassergehalt auf. Hier kann es an den Niedertemperaturheizflächen zu teilweiser Auskondensation im Abgas kommen, so daß noch mehr Wärme genutzt werden kann als im gezeigten Fall einer geraden Abkühllinie des Heißgases.

Mit dem Konzept des Heißwasserkreislaufsystems kann - unter Verzicht von extrem niedrigen Abgastemperaturen - ein höherer Dampfdruck gefahren werden, und das bei niedriger Enddampfnässe in der Turbine als beim konventionellen Prozeß. Es ist freigestellt den Vorteil des höheren Drukkes nicht voll ausnutzen und zwischen Gasabkühlung und Dampfdruck ein Optimum zu suchen. Ausgehend von dieser Basisschaltung lassen sich sowohl auf der Wärmetauscher - als auch auf der Energiewandlerseite Variationen darstellen, bei welchen sich der dargelegte Effekt noch weiter erhöhen kann. Zunächst werden allerdings einige Variationen auf der Wärmetauscherseite gezeigt.

Fig. 6 zeigt eine Variante, bei der der Economiser - 3.3.b - und die Heizfläche des Heißwasserkreislaufes - 3.3.e - einen gemeinsamen Eintrittssammler - 3.2 - aufweisen. Das aufgeheizte Heißwasser aus der Heizfläche des Heißwasserkreislaufsystems - 3.3.e - gelangt über den Austrittssammler - 3.4.e - über die Heißwasservorlaufleitung - 8.3 - zum Energiewandler, während das Kaltwasser über die Kaltwasserrücklaufleitung - 8.4 - und der Mischstelle - 3.6 - dem entgasten Speisewasser zugemischt wird. Diese Anordnung ist z.B. bei überkritischen Durchlaufdampferzeugern von Vorteil.

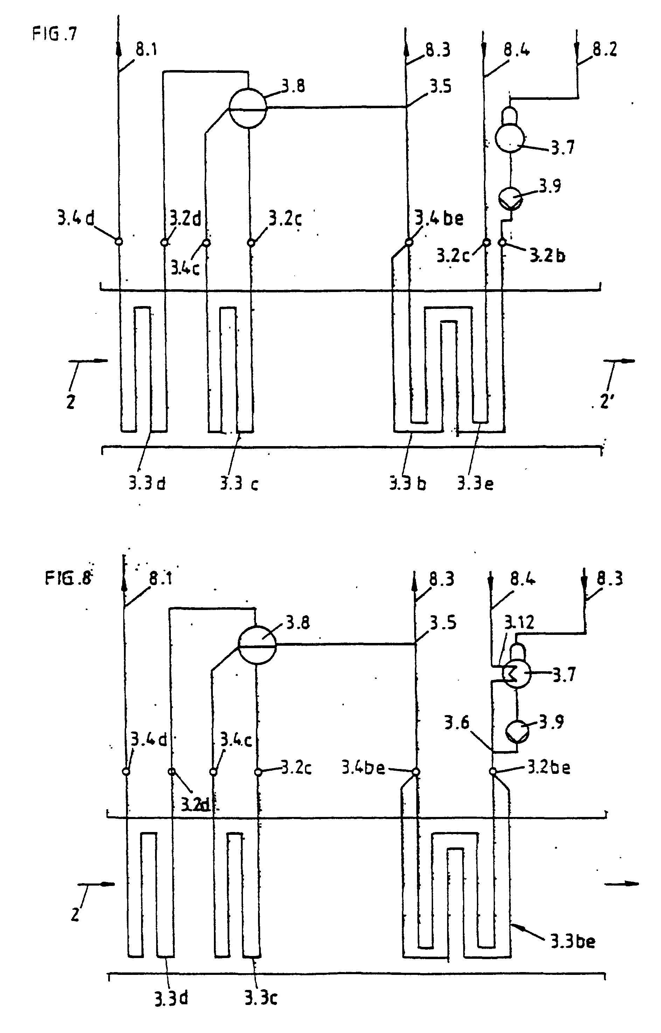

Fig. 7 zeigt eine Variante, bei der Austrittssammler - 3.4.be - gemeinsam, d.h. für den Economiser - 3.3.b und die Heizfläche des Heißwsserkreislaufsystems -3.3.e - vorgesehen ist. Das Heißwasser zweigt bei der Abzweigstelle - 3.5 - vom vorgewärmten Speisewasserstrom ab, der Kaltwasserrücklauf wird über dem Eintrittssammler - 3.2.e - der Heizfläche des Heißwasserkreislaufsystems - 3.3.e - zugeführt. Der dampferzeugende Teil des Wärmetauschers ist dabei beispielhaft als Trommelkessel mit einer eigenen Verdampferheizfläche - 3.3.c - und einer Dampftrommel - 3.8 - ausgeführt. Wie bekannt, können solche Verdampfersysteme zusätzlich mit einer Umwälzpumpe (Zwangsumlaufsysteme) ausgestattet sein oder - wie dargestellt - mit einem Naturumlaufsystem, welches von den Dichteunterschieden Gebrauch macht.

Fig. 8 zeigt eine weitere Variante, wobei die Aufheizung des Speisewassers und des Wassers des Heißwasserkreislaufs in einer gemeinsam durchflossenen Heizfläche - 3.3.be - erfolgt, wobei in diesem Fall das Heißwasser hinter der gemeinsam durchflossenen Heizfläche bei der Abzweigestelle - 3.5 - abgezweigt und das Kaltwasser bei der Mischstelle - 3.6 - eingebunden wird. In dieser Variante ist das Ausnutzen der Resttemperatur des abgekühlten Wassers des Heißwasserkreislaufsystems gezeigt, wobei das "kalte" Rücklaufwasser über eine Wärmetauscherfläche - 3.12 - den Wasserraum einer Dampftrommel, z. B. des Entgasers -3.7 - beheizt, so daß eine weitere Beheizung des Entgasers, z.B. mit Dampf aus dem Wärmetauscher oder mit Anzapfdampf aus der Dampfturbine, entfallen kann.

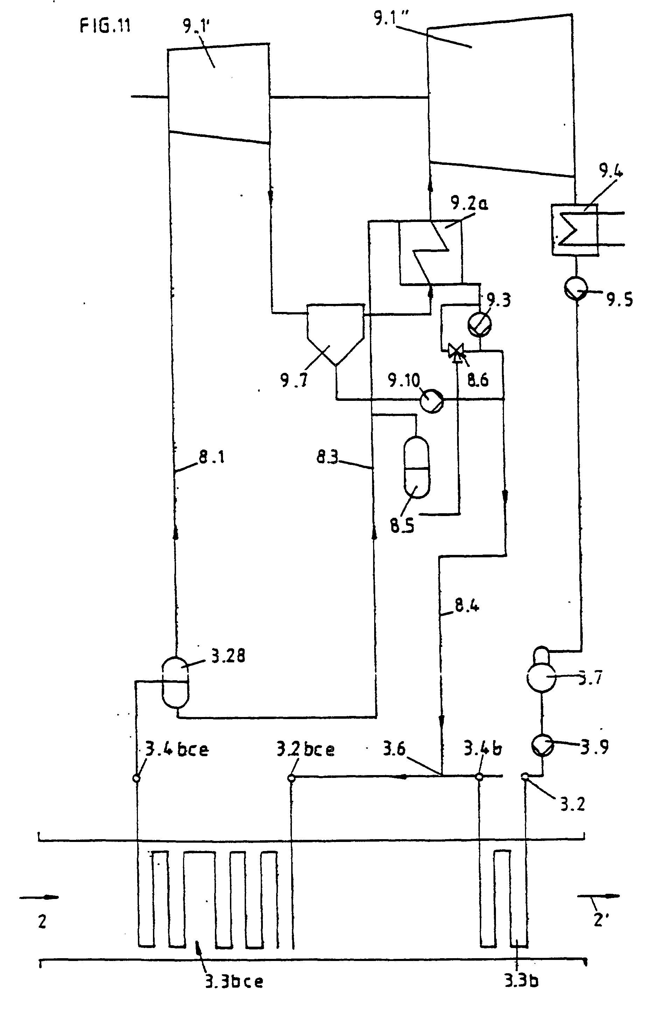

Fig. 9 zeigt eine weitere Variante zu Fig. 8 (gemeinsame Heizfläche), wobei das Heißwasser von der Trommel - 3.8 - bei der Abzweigestelle - 3.5 - abgezweigt wird; dadurch ist das Heißwasser für die Zwischenüberhitzung kaum Temperaturschwankungen unterworfen, da das Speichervermögen der Trommel - 3.8 - raschere Schwankungen puffert. Besonders interessant ist diese Schaltung bei stark fluktuierendem Abwärmeangebot (mengen- und/oder temperaturmäßig), wobei im extremen Fall - Aussetzbetrieb beim Wärmeangebot - auf die Überhitzung des Frischdampfes verzichtet werden kann (dies ist in der Fig. 11 dargestellt). Die Zwischenüberhitzung erfolgt hier in der Weise, daß zwischen dem Hochdruckteil - 9.1' - und dem Niederdruckteil der Turbine - 9.1" -, in der sog. Überströmleitung der Zwischenüberhitzer - 9.2.a -, welcher mit Wasser des Heißwasserkreislaufsystems durchflossen wird, angeordnet ist. Das abgekühlte Wasser des Heißwasserkreislaufsystems kann zusätzlich zur Leitschaufelbeheizung - 9.2.b - der Niederdruckturbine - 9.1'' - im Naßdampfteil verwendet werden (strichliert dargestellt). Da gegenüber der unendlichstufigen Wärmezufuhr die Abkühlung des Wassers des Heißwasserkreislaufsystems bei höheren Temperaturen (z.B. bei 125°C) endet, wird dieses erst nach der ersten Stufe des Economisers - 3.3.b - über die Mischstelle - 3.6 - zugeführt, so daß erst die gemeinsame Heizfläche - 3.3.be - einen Massendurchsatz hat, welcher jenen der Frischdampfmenge signifikant überschreitet.

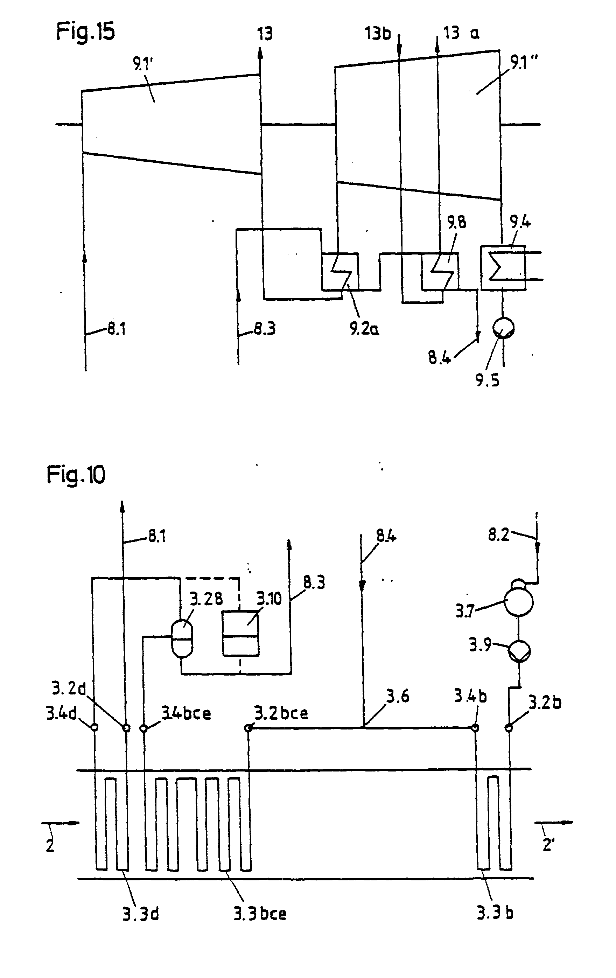

Fig. 10 zeigt die für unterkritische Prozesse baumäßig möglicherweise einfachste Schaltung des Wärmetauschers, wobei der Kessel als Durchlaufkessel mit einer Wasser/Dampftrennung in einer Abscheideflasche - 3.28 - ausgebildet ist; der Dampf wird gegebenenfalls im Überhitzer - 3.3.d - weiter überhitzt und das abgeschiedene/abgezweigte Wasser über die Heißwasservorlaufleitung - 8.3 - dem Energiewandler zuleitet. Die Schaltungen gemäß der Figur. 9 und 10 eignen sich für Speicherzwecke , indem die Dampftrommel bzw. die Abscheideflasche groß genug ausgeführt wird oder auch dieses Gefäß mit einem räumlich getrennten Speichergefäß - 3.10 - in kommunizierender Weise verbunden werden. Diese Variante ist strichliert in Fig. 10 dargestellt; der Überhitzer - 3.3.d - ist hier nicht in Gegenstrom sondern in Gleichstrom zum Heißgas geschaltet.

In der Fig. 11 ist der Frischdampf gesättigt (d.h., daß der in der Abscheideflasche - 3.28 - von der Dampfnässe befreiten Sattdampf ohne Überhitzung über die Dampfleitung - 8.1 - dem Energiewandler zugeleitet wird). Die Dampfnässe aus dem Abdampf des Hochdruckzylinders - 9.1' - wird über ein Zyklon - 9.7 - abgeschieden, wobei das abgeschiedene Wasser über eine Pumpe - 9.10 - der Kaltwasserrücklaufleitung - 8.4 - beigegeben werden kann. Grundsätzlich kann auch - zur weiteren Vergleichmäßigung - bei nahezu allen Schaltungsvarianten zwischen dem Vor- und Rücklauf des Heißwasserkreislaufes ein Heißwasser-Verdrängungsspeicher - 8.5 - installiert werden, welcher über die Dreiwegarmatur - 8.6 - und unter Verwendung der Rezirkulationspumpe - 9.3 - in bekannter Weise geladen oder entladen werden kann.

Die nach Fig. 2, 6 bis 11 gezeigten Schaltungen haben einen Dampferzeugungsteil, der nur Hauptdampf produziert.

Ein weiters Erhöhen des Wirkungsgrades gemäß dem erfindungsgemäßen Effekt ist unter anderem durch das Produzieren von Zusatzdämpfen mit niedrigeren Drücken als dem Druck der Hauptdampfmenge möglich. Damit lassen sich auch Abgastemperaturen von 80 bis 100°C erreichen, im Gegensatz zu ca. 135 bis 145°C im Fall eines Hauptdampfprozesses bei der erfindungsgemäßen Ausführung (Fig. 5).

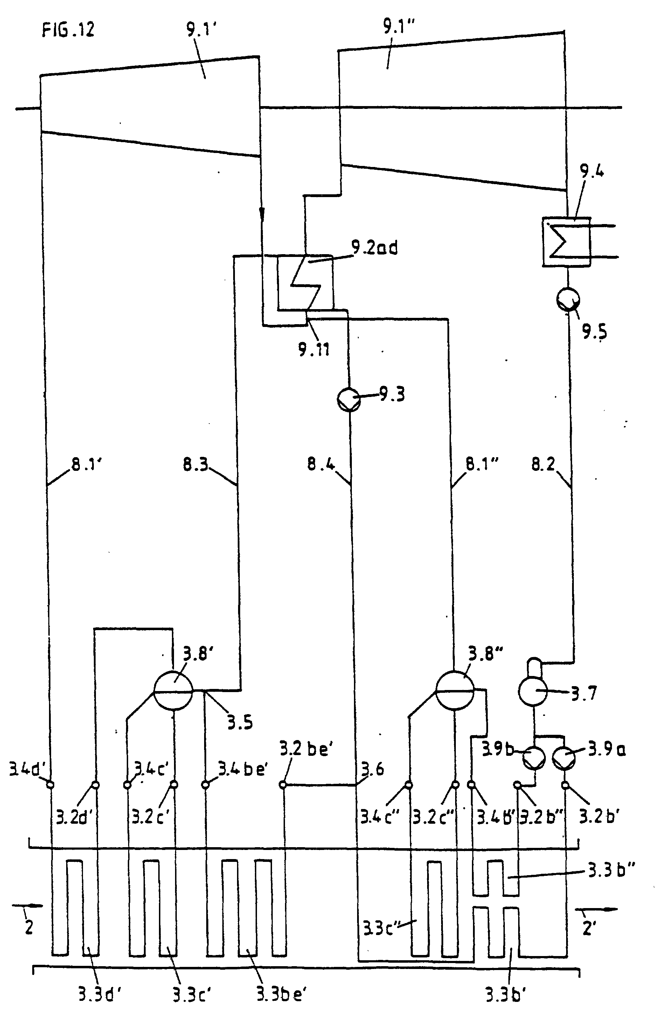

Fig. 12 zeigt als Beispiel einen Zweidruckprozeß, der dampferzeugende Teil produziert zum Hauptdampf eine Zusatzdampfmenge. Dazu ist hinter dem Entgaser - 3.7 - nicht nur die Haupt-Speisewasserpumpe - 3.9.a - vorgesehen (welche das Hauptdampfsystem versorgt), sondern auch eine Zusatz-Speisewasserpumpe - 3.9.b - , welche eine Teilmenge über dem Eintrittssammler - 3.2.b" - , dem Economiser - 3.3.b" - und dem Austrittssammler - 3.4.b" - der Zusatz-Dampftrommel - 3.8"- zuführt; die Verdampfung erfolgt im Verdampfer - 3.3.c" -. Der Zusatzdampf wird über die Dampfleitung - 8.1" - dem Energiewandler zugeführt und vereinigt sich an der Zumischstelle - 9.11 - mit dem expandierten Abdampf der Hochdruckturbine - 9.1' -. Der Oberflächenwärmetauscher- 9.2.ad - läßt nicht nur dem expandierenden Dampf eine Zwischenüberhitzung zukommen, sondern auch dem zugemischten Zusatzdampf eine Überhitzung. Damit entfällt der sonst übliche - im Heißgasschacht untergebrachte - Überhitzer für den Zusatzdampf.

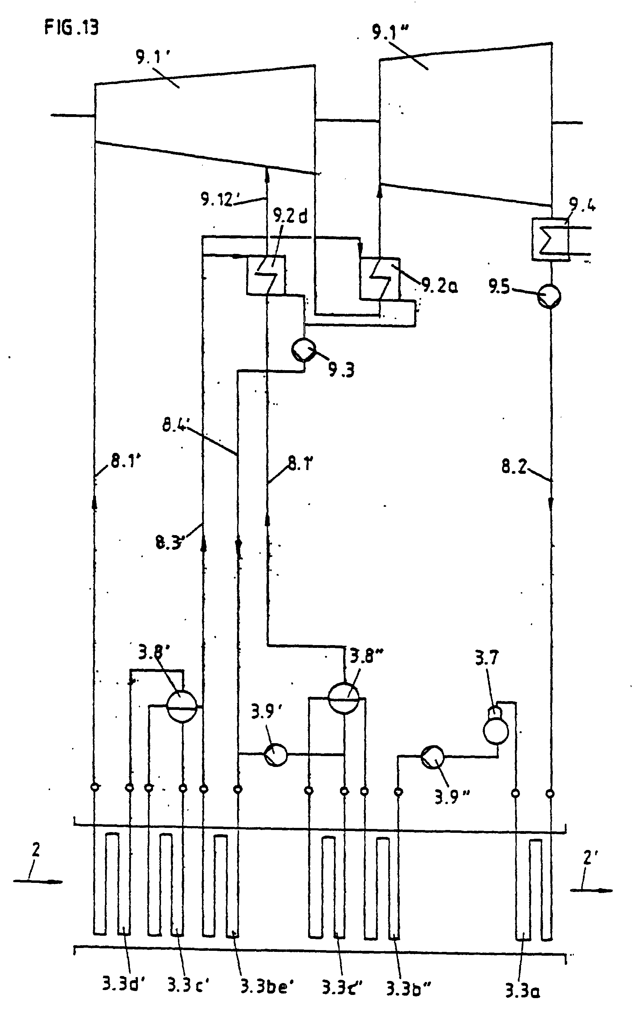

Fig. 13 zeigt eine vom Aufwand vorteilhafte Schaltung, bei welchem der MD-Sattdampf aus der Dampfleitung - 8.1"- im MD-Überhitzer - 9.2.d - und der Expansionsdampf aus dem Hochdruckzylinder - 9.1'- Zwischenüberhitzer - 9.2.a - mittels Heißwasser beheizt werden, wobei ein eigener Mitteldruck-Dampfturbinenzylinder nicht erforderlich ist, weil der MD-Dampf nach der Überhitzung etwa die gleiche Temperatur aufweist wie der Expansionsdampf im ersten Turbinenzylinder - 9.1' - an der Einspeisestelle - 9.12'-. Der Zwischenüberhitzer - 9.2.a- nimmt den Platz der ohnehin erforderlichen Überströmleitung zwischen HDund ND-Zylinder - 9.1' - bzw. - 9.1" - ein.

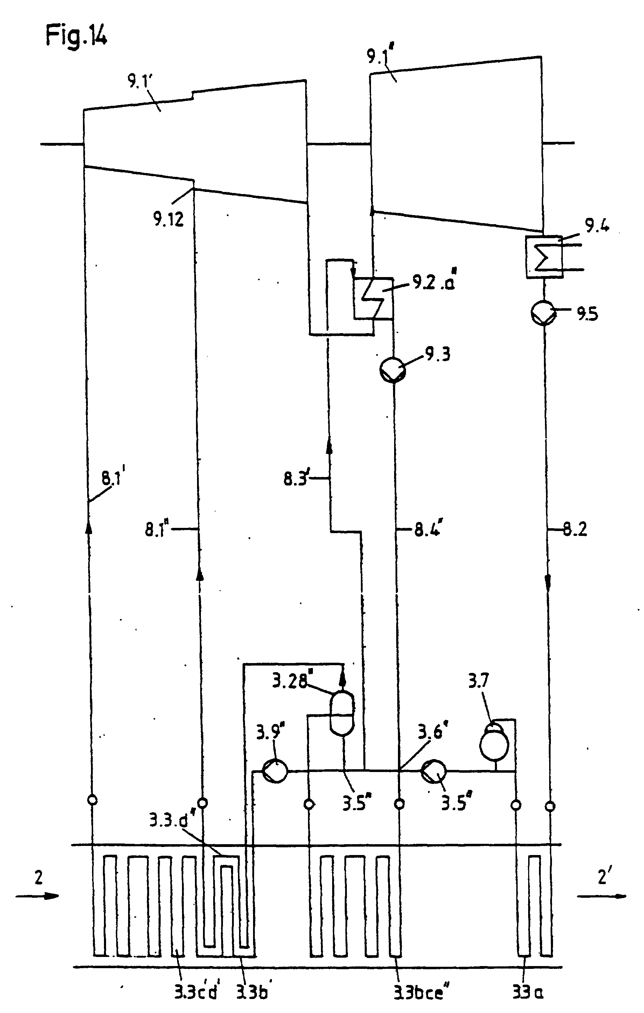

Hohe Heißwasservorlauftemperturen jenseits von 300 - 350°C erfordern hohe Nenndrücke im Heißwasserkreislauf und führen zu komplizierten und teuren Lösungen. In der Fig. 14 ist eine beispielhafte Schaltung angeführt, die den o.g. Nachteil vermeidet. Hier ist der Hochdruckteil vorzugsweise überkritisch, der Mitteldruckdampf liegt druckmäßig relativ hoch,er wird im Überhitzer - 3.3.d" - des Wärmetauschers - 3 - zusätzlich überhitzt, wobei die Heizflächen des HD-Economisers - 3.3.b'- und des MD-Überhitzers - 3.3.d'' - ineinander verflochten sind; die Überhitzung erfolgt nur so weit, daß die Überhitzungstemperatur etwa der Dampftemperatur des auf das MD-Niveau expandierten HD-Dampfes im Hochdruckzylinder - 9.1'- entspricht. Damit kann wieder - wie bei der Schaltung gemäß der Fig. 13 - ein Turbinenzylinder mit Einspeisung - 9.12' - verwendet werden. Der MD-Economiser/Verdampfer ist als gemeinsame Heizfläche - 3.3.bce'' - ausgebildet, das Heißwasser wird in gezeigtem Fall aus einer Abscheideflasche - 3.28" - entnommen und dem ND-Zwischenüberhitzer - 9.2.a'' - zugeführt. Insbesondere bei langen Energietransportleitungen zwischen dem Wärmetauscher und dem Energiewandler ist es wesentlich, ob die Rohrleitungen und Armaturen einer gängigen und noch preiswerten Nenndruckstufe entsprechen.

Einen betragsmäßig überraschend hohen Effekt erreicht man in der Schaltung gemäß Fig. 15, wo die weitere Abkühlung des Kaltwassers in einem Fernwärmeauskoppler - 9.8 - erfolgt, wobei die ausgekoppelte Wärme über Wärmeauskopplungsvor- und -rücklaufleitungen - 13a - bzw. - 13b - dem Verbraucher bereitgestellt wird. In industriellen Prozessen wird oft Heizdampf im Mittel- oder Niederdruckbereich als Energieträger benötigt, wobei der Abhitzekessel u.U. in der Lage ist, mehr Dampfmengen als benötigt und mit einem höheren Druckniveau als nötig, zur Verfügung zu stellen. Die Anwendung des erfindungsgemäßen Prinzips für diesen Fall der Heizdampfauskopplung ist in Fig. 15 als zusätzliche Möglichkeit eingezeichnet. Der Hochdruckdampf expandiert in der Turbine - 9.1'- auf das Niveau der Heizdampfschiene - 13 - und baut seine Überhitzung weitgehend ab. Der für Heizzwecke nicht benötigte ND-Dampf wird erfindungsgemäß im Zwischenüberhitzer - 9.2.a - zwischenüberhitzt und im Niederdruckturbinenteil - 9.1" - entspannt.

Fig. 16 zeigt diesen Erfindungsgedanken am speziellen Fall einer Abhitzenutzung hinter einem Kolbenmotor - 1a -. Das Abgas - 2 - erzeugt im Wärmetauscher - 3 - überhitzten HD-Dampf und Heißwasser, wobei das Heißwasser im Oberflächenwärmetauscher -9.2.ad - den eigenen expandierten HD-Dampf aus dem Dampfturbinenzylinder - 9.1' - zwischenüberhitzt und zusätzlich die durch die Verdampfungskühlung des Motors bei leichtem Überdruck, z.B. bei 1,5 bar, entstehenden und über die Dampfleitung - 8.1" - bereitgestellte Dampfmenge überhitzt; das im Motor verdampfte Wasser wird durch die Förderpumpe - 9.10 - ergänzt und über die Speisewassserleitung - 8.2" - dem Motor - 1a - zugeführt. Damit lassen sich Gesamtwirkungsgrade beachtlicher Höhe erreichen, da nicht nur die Auspuffwärme des Kolbenmotors sondern auch seine Kühlwärme genutzt wird.

Fig. 17 zeigt die apparatemäßige Ausführung des Oberflächernwärmetauschers - 9.2 - z. B. für die Schaltung gemäß der Fig. 12. Der Wärmetauschapparat ist in unmittelbarer Nähe der Turbine - unter Vermeidung von Totvolumen - angeordnet, das Heißwasser wird auf der Rohrinnenseite der Wärmetauscherrohre - 9.2.e - geführt, mantelseitig (dampfseitig) sind Rippenrohre vorgesehen. Der Apparat weist Schikanen (Baffels) - 9.2.f - auf, wobei der Zwischen-Überhitzungszone - 9.2.ad''- die Vorüberhitzerzone - 9.2.d" - für den Zusatzdampf mit engeren Schikanenabstand vorgeschaltet ist. Die Schnellschlußventile - 9.14 - befinden sich bei den Zuleitungen der Dämpfe - 8.1', 8.1" -, wobei in der heißen Zwischenüberhitzungsleitung selbst kein Ventil zum Schnellschluß vorgesehen ist. Derartige Schnellschlußventile sind bei herkömmlichen rauchgasbeheizten Zwischenüberhitzern ("ZÜ") aufgrund des großen Speichervolumens in den ZÜ-Heizflächen und - leitungen ein Muß. Sie sind aufgrund der großen Nennweite teuer und schwer und von der Sicherheits- und Verriegelungstechnik anspruchsvoll.

In Sonderfällen ist sogar eine Integration des Zwischenüberhitzers - 9.2.a - innerhalb der Expansionsmaschine zwischen einem Hoch- und Niederdruckteil - 9.1 '- und - 9.1" - ausführbar. Fig. 18 zeigt diese Möglichkeit für Dampfturbinen, wobei zusätzlich die Beheizung in eigenen, beheizten Leitschaufeln - 9.2.b - u.U. mit einer vergrößerten berippten Oberfläche - und/oder auch über einem mediumdurchflossenen Rotor über die Laufschaufeln (und der Nabe - nicht dargestellt) erfolgen kann.

Fig. 19 zeigt Details der Regelung auf der Wärmetauscherseite.Demnach sitzt das Speisewasserregelventil - 3.14 -, welches vom Wasserstandsregler - 3.15 - angesteuert wird, entweder vor der Mischstelle - 3.6 - (wie dargestellt) oder hinter der Abzweigstelle - 3.5 - (Fig. 20). Die Umwälzung wird z.B. über ein Wasserregelventil - 3.16 -, welches vom Temperaturdifferenzregler - 3.17 - angesteuert wird, so geregelt (Fig. 20) , daß die Wassertemperaturen vor der Mischstelle - 3.6 - etwa gleich laufen. Nur bei Über- oder Unterschreitung der Zwischenüberhitzertemperatur wird die Umwälzung zurückgenommen bzw. erhöht. Eine Einspritzregelung ist i.a. nicht vorgesehen.

Bei all den Schaltungstypen und bei der thermodynamischen Analyse dieser erkennt man, daß der Frischdampf -("FD")-Überhitzungstemperatur nicht mehr die zentrale Bedeutung bei der Wirkungsgradsteigerung zukommt, sondern daß das Erreichen eines hohen FD-Druckes, das Erreichen nicht zu hoher Enddampfnässen im Abdampf der Turbinen, das Erreichen niedriger Druckabfälle im Zwischenüberhitzer und das Erreichen tiefer Abgastemperaturen wichtiger ist. Bezüglich des FD-Überhitzers kann man daher auf betrieblich gutmütige Gleichstromschaltungen zurückgreifen und eventuell auch auf eine Einspritzregelung verzichten. Die Absenkung des Temperaturniveaus in der Rohrwand des Überhitzers ist bei einigen Anwendungsfällen von unschätzbarem Wert (z.B. bei der Müllverbrennung, wenn es gilt, Hochtemperatur-Korrosionen zu vermeiden). In einigen Fällen ist sogar - wie gezeigt - auf eine FD-Überhitzung zu verzichten (s.a. Fig. 11).

Diese genannten Schaltungen können auch mit Vorteil verwendet werden, auch wenn es darum geht, das Abgas sehr rasch abzukühlen (zu "quenchen"), um z.B bei Sondermüllverbrennungsanlagen die Rückbildung von Dioxin über die De-Novo-Synthese zu unterbinden; diese Gasabkühlung erfolgt in einem Gleichstromüberhitzer rascher als in einem Gegenstromüberhitzer und noch rascher, wenn der Überhitzer überhaupt entfällt.

Auch die sehr tiefe Abgastemperatur kann von Vorteil sein, wenn z.B. der Gaskühlung eine Gasbehandlungsanlage nachgeschaltet ist, welche in der Regel bei kälterem Abgas besser und weniger störungsanfällig arbeitet (Tuchfilter, Wäscher etc.)

Neben dem thermodynamischen Vorteil lassen sich eine Reihe vor allem verfahrensprozessmäßige, kostenmäßige und baulicher sowie betrieblicher Vorteile anführen; diese können bestehen aus (siehe: Kopfzeile der Tabelle):
1. Vorteile der Kreislauf-Prozeßdaten:
   - höhere Dampfdrucke möglich
   - niedrigere (mildere) Überhitzungstemperatur bringt technologische Vorteile
   - niedrige Abgastemperaturen möglich
   - hohes Speichervermögen
   - höhere Stromausbeute möglich (Kraft- und Wärmenutzung statt reine Abwärmenutzung im Extremfall)
2. Bauliche und kostenmäßige Vorteile:
   - beim Wärmetauscher
   - bei den Energietransportleitungen (Rohrleitungen)
   - bei der Expansionsmaschine
3. Betriebliche Vorteile:
   - beim An- und Abfahren
   - beim Dauerbetrieb

Je nach Anwendungsfall können diese Vorteile mehr oder weniger Gewicht haben. Es werden daher in der Tabelle (in der linken Spalte) beispielhafte Anwendungen (ohne Anspruch auf Vollständigkeit) aufgelistet, dabei werden zuerst Abhitzeprozesse zur Abgaskühlung angegeben, beginnend mit Prozessen, bei dem das Abgas energetisch hochwertig ist (hohe Temperatur, gleichmäßiger Anfall, wenig korrosiv) und endend mit schwierig verstrombaren Abwärmen (niedrige Temperatur oder stoßweise anfallend, korrosiv). Sodann werden Rückkühlprozesse mit einem Kreislaufgas (oder -medium) angeführt.

Neben der Spalte Anwendungen ist der übliche - dem Stand der Technik entsprechende - Kraftprozess wiedergegeben; daneben ist die vorzugsweise Schaltung gemäß der (den) Figur(en) der Erfindung angeführt. Im Hauptfeld der Tabelle sind die Vorteile der Erfindung angeführt und gewichtet:
- A:: signifikante Vorteile
- B:: mittlere Vorteile
- C:: geringfügige Vorteile
- -: keine Vorteile

So ergeben sich bei Abhitzeprozessen hinter Gasturbinen (Gas- und Dampfturbinenprozesse) - verglichen mit dem optimalen 3-Druck+ZÜ-Prozeß - Vereinfachungen beim Wärmetauscher, bei den Rohrleitungen und bei der Turbine, oder - verglichen mit den einfachen 2-Druck-Prozeß - höhere Stromausbeuten (Wirkungsgrade). Bei den nachfolgenden Abhitzeprozessen aus der Entsorgungstechnik (Müll, Klärschlamm) und der Industrie kann der Verstromungsanteil signifikant gesteigert werden oder überhaupt erst eine Verstromung sinnvoll gemacht werden.

Im industriellen Bereich ist vielfach der Abhitzekessel und'das Turbinenhaus räumlich weit voneinander entfernt, sodaß Vorteile beim Entfall von dampfführenden Zwischenüberhitzerleitungen stark ins Gewicht fallen können - dies ist z.B. bei der Kokstrockenkühlung der Fall, wo die Kokstrockenkühlanlage - im wesentlichen bestehend aus dem Kühlbunker sowie dem Abhitzekessel und der Gasrezirkulation - zum Kühlen des Glühkokses aus Kokereien in Nähe der Koksofenbatterien steht und das Turbinenhaus weit entfernt ist, sodaß - gemäß dem Stand der Technik - auf die Zwischenüberhitzung verzichtet wird, obwohl das Temperaturniveau des Heißgases durchaus energetisch hochwertig ist.

Bei Dampferzeugern für gasgekühlte Reaktoren wiederum wird ein voluminöser Zwischenüberhitzer als nachteilig angesehen, wodurch der externe erfindungsgemäße Zwischenüberhitzer Vorteile von der Anordnung und des Betriebes darstellt.

Wegen der Vielzahl der Anwendungsmöglichkeiten, der vielen Variationen, von welchem Stand der Technik man ausgeht, der vielfältigen Kombinationen innerhalb des Erfindungsprinzips und der Tatsache, daß Vorteile vielfach nur an Hand von konkreten Projekten gewichtet werden können, muß diese tabellarische Aufstellung zwangsläufig lückenhaft sein und kann nur Hinweise zur optimalen Gestaltung der Prozesse geben.

## Patentansprüche

1. Vorrichtung zur Energieumwandlung unter Nutzung von Wärme aus einem heißen Fluid (2) mit einem von dem heißen Fluid (2) durchströmten Wärmetauscher (3), der eine Vorwärmer- und/oder Economiserheizfläche und eine Verdampfer- sowie gegebenenfalls eine Überhitzerheizfläche (3.3.d) aufweist, durch die als Arbeitsmedium Wasser strömt, mit Dampf- (8.1) und Speisewasserleitungen (8.2) zum Zuführen von Dampf aus dem Wärmetauscher (3) zu einem Energiewandler (9) mit einer oder mehreren Expansionsmaschinen (9.1, 9.1', 9.1") und zum Rückführen von aus dem Energiewandler (9) austretendem Dampf bzw. daraus kondensiertem Wasser zum Wärmetauscher (3) und mit mindestens einem Zwischenüberhitzer (9.2, 9.2a) zur Überhitzung des noch nicht vollexpandierten Dampfes, wobei ein Heißwasserkreislaufsystem mit Heißwasservorlauf- (8.3) und Kaltwasserrücklaufleitungen (8.4) und einer im Wärmetauscher (3) angeordneten Heizfläche (3.3bce) des Heißwasserkreislaufs vorgesehen ist und das Heißwasserkreislaufsystem mit dem außerhalb des Wärmetauschers (3) angeordneten Zwischenüberhitzer (9.2, 9.2a) verbunden ist, **dadurch gekennzeichnet, daß** die Vorwärmer- und/oder Economiserheizfläche, die Verdampferheizfläche und die Heizfläche des Heißwasserkreislaufs durch eine gemeinsame Heizfläche (3.3.bce) gebildet werden (Fig.10).

2. Vorrichtung nach Anspruch 1, **dadurch gekennzeichnet, daß** der gemeinsamen Heizfläche (3.3.bce) eine Abscheideflasche (3.28) nachgeordnet ist, die über eine Dampfleitung (8.1) gegebenenfalls über Zwischenschaltung.der Überhitzerheizfläche (3.3.d) mit einer Expansionsmaschine (9.1') und über die Heißwasservorlaufleitung (8.3) mit dem Zwischenüberhitzer (9.2) verbunden ist.

3. Vorrichtung nach einem der vorhergehenden Ansprüche, **dadurch gekennzeichnet, daß** die Druckleitung der Speisewasserpumpe (3.9) und die Kaltwasserrücklaufleitung (8.4), die vorzugsweise Wassermengen mit etwa gleicher Temperatur führen, in einen gemeinsamen Eintrittssammler (3.2bce) münden, der mit der gemeinsamen Heizfläche (3.3.bce) verbunden ist.

4. Vorrichtung nach Anspruch 3, **dadurch gekennzeichnet, daß** in der Speisewasserleitung (8.2) vor dem Eintrittssammler (3.2.be) ein Speisewasserregelventil (3.14) zur Konstanthaltung des Wasserstandes in der Abscheideflasche (3.28) angeordnet ist.

5. Vorrichtung nach einem der vorhergehenden Ansprüche, **dadurch gekennzeichnet, daß** zwischen der Heißwasservorlaufleitung (8.3) und der Kaltwasserrücklaufleitung (8.4) ein Heißwasserverdrängungsspeicher (8.5) vorgesehen ist (Fig.11).

6. Vorrichtung nach einem der vorhergehenden Ansprüche, **dadurch gekennzeichnet, daß** in dem Zwischenüberhitzer (9.2) eine Zusatzdampfleitung (8.1") in einen Vorwärmbereich (9.2.d") einmündet, an den sich ein (Zwischen)überhitzerbereich (9.2.a.d") anschließt, in den die Abdampfleitung einer Expansionsmaschine mündet.

7. Vorrichtung nach einem der vorhergehenden Ansprüche, **dadurch gekennzeichnet, daß** der Zwischenüberhitzer als Rohrwärmetauscher ausgeführt ist, wobei in den Rohren (9.2.e) das Heißwasser und zwischen den Rohren und dem Mantel der Dampf geführt wird (Fig. 17).

8. Vorrichtung nach einem der vorhergehenden Ansprüche, **dadurch gekennzeichnet, daß** ein Abschnitt der hinter dem Zwischenüberhitzer (9.2) befindlichen Kaltwasserrücklaufleitung (8.4) eine Wärmetauscherfläche (3.12) zur Beheizung eines Wasserraumes einer Dampftrommel bzw. eines Entgasers (3.7) ist.

9. Vorrichtung nach einem der vorhergehenden Ansprüche, **dadurch gekennzeichnet, daß** in der Kaltwasserrücklaufleitung (8.4) ein Wasserregelventil (3.16) angeordnet ist, welches zur Sicherung des Gleichlaufes der Temperaturen vor der Mischstelle (3.6) von einem Temperaturdifferenzregler (3.17) angesteuert ist.

10. Verfahren zur Energieumwandlung unter Nutzung von Wärme aus einem heißen Fluid (2), wobei die Wärme in einem von dem heißen Fluid (2) durchströmten Wärmetauscher (3) auf ein eine Vorwärmer- und/oder Economiserheizfläche (3.3a, b), eine Verdampfer- (3.3c) sowie gegebenenfalls eine Überhitzerheizfläche (3.3d) durchfließendes Arbeitsmedium übertragen wird und dieses verdampft, der so entstandene (Haupt)dampf einem Energiewandler (9) mit einer oder mehreren Expansionsmaschine(n) (9.1', 9.1") zugeführt und dort expandiert wird und der teilexpandierte Dampf mindestens einmal zwischenerhitzt wird, wobei für die Zwischenerhitzung Wasser durch Wärmeübertragung im Wärmetauscher (3) erhitzt wird und über ein Heißwassersystem einem Zwischenüberhitzer (9.2) zur Wärmeübertragung an den teilexpandierten Dampf zugeleitet wird, **dadurch gekennzeichnet, daß** die Beheizung des teilexpandierten Dampfes bei einer Dampftemperatur durchgeführt wird, die unterhalb der Arbeitsmediumtemperatur am Pinch-Point (Temperaturannäherung Fluidtemperatur - Arbeitsmediumtemperatur) liegt.

11. Verfahren nach Anspruch 10, **dadurch gekennzeichnet, daß** die Beheizung bis zu einer Temperatur durchgeführt wird, die über der Temperatur des Abdampfes der letzten Expansionsmaschine vor Eintritt in einen Kondensator liegt (Fig. 3, 5) .

12. Verfahren nach Anspruch 11, **dadurch gekennzeichnet, daß** vom Zwischenüberhitzer (9.2a) über Wärmetauscherflächen kontinuierlich Wärme vom Heißwasser auf den expandierenden Dampf übertragen wird.

13. Verfahren nach Anspruch 10 oder 11, **dadurch gekennzeichnet, daß** dieses Verfahren als Sattdampfprozeß in mindestens zwei Expansionsschritten durchgeführt wird und der Dampf nach dem ersten Expansionsschritt in der Hochdruckexpansionsmaschine (9.1') einem Wasserabscheider (9.7) zugeführt wird, bevor er über den Zwischenerhitzer (9.2.a) der folgenden Expansionsmaschine (9.1") für den zweiten Expansionsschritt zugeführt wird (Fig. 11).

14. Verfahren nach einem der Ansprüche 10 bis 13, **dadurch gekennzeichnet, daß** im Wärmetauscher über Zusatzheizflächen (3.3.b",3.3.c") Zusatzdampf erzeugt wird und über eine Zusatzdampfleitung (8.1") dem Zwischenüberhitzer (9.2.ad) zur Überhitzung und Mischung mit dem Hauptdampf zugeführt wird (Fig. 12, 13, 14).

15. Verfahren nach einem der Ansprüche 10 bis 14, **dadurch gekennzeichnet, daß** im Wärmetauscher über Zusatzheizflächen (3.3.b", 3.3.c") gesättigter Zusatzdampf erzeugt wird und über eine Zusatzdampfleitung (8.1") einem an das Heißwassersystem angeschlossenen Zusatzüberhitzer (9.2.d) zugeleitet wird und daß der daraus austretende Dampf dem Energiewandler vor der Zwischenerhitzung zugeführt wird (Fig. 13).

16. Verfahren nach einem der Ansprüche 10 bis 15, **dadurch gekennzeichnet, daß** das aus dem Zwischüberhitzer (9.2) austretende Wasser über die Kaltwasserrücklaufleitung einer Vorrichtung zur Abgabe der Restwärme, wie z.B. einer Wärmetauscherfläche (3.12) zur Beheizung des Wasserraumes einer Dampftrommel oder einem Wärmeauskoppler (9.8), und danach wieder dem Wärmetauscher zugeführt wird (Fig. 8, 15).

17. Verfahren nach einem der Ansprüche 10 bis 16, dadurch gekennzeichnt, daß das Fluid Abgas einer Verbrennungskraftmaschine (1.a) mit Verdampfungskühlung ist, wobei der Niederdruckdampf der Verdampfungskühlung dem Zwischenüberhitzer zur Überhitzung und Mischung mit dem Hauptdampf zugeführt wird (Fig. 16).

## Claims

1. Apparatus for converting energy by using heat from a hot fluid (2) with a heat exchanger (3), through which the hot fluid (2) flows and which comprises a preheater heating surface and/or an economizer heating surface and an evaporator heating surface as well as, optionally, a superheater heating surface (3.3.d), through which water flows as working medium, with steam lines (8.1) and feed water lines (8.2) for supplying steam from the heat exchanger (3) to an energy converter (9) with one or more expansion machines (9.1, 9.1', 9.1") and for returning to the heat exchanger (3) steam or water, condensed therefrom, leaving the energy converter (9), and with at least one intermediate superheater (9.2, 9.2a) for superheating the steam, not yet fully expanded, wherein a hot water circuit system is provided, the latter having hot water flow and cold water return lines (8.3, 8.4) and a heating surface (3.3bce), disposed in the heat exchanger (3), of the hot water circuit, and the hot water circuit system is connected to the intermediate superheater (9.2, 9.2a), which is disposed outside of the heat exchanger (3), **characterised in that** the preheater heating surface and/or economizer heating surface, the evaporator heating surface and the heating surface of the hot water circuit are formed by a common heating surface (3.3.bce) (Figure 10).

2. Apparatus according to Claim 1, **characterised in that** a separator bottle (3.28) is disposed downstream of the common heating surface (3.3.bce), which bottle is connected via a steam line (8.1), optionally with the interposition of the superheater heating surface (3.3.d), to an expansion machine (9.1') and via the hot water flow line (8.3) to the intermediate superheater (9.2).

3. Apparatus according to either of the preceding Claims, **characterised in that** the delivery line of the feed water pump (3.9) and the cold water return line (8.4), which preferably carry volumes of water at approximately the same temperature, lead into a common intake collector (3.2bce), which is connected to the common heating surface (3.3.bce).

4. Apparatus according to Claim 3, **characterised in that** a feed water control valve (3.14) for maintaining a constant water level in the separator bottle (3.28) is disposed in the water feed line (8.2) before the intake collector (3.2.be).

5. Apparatus according to any one of the preceding Claims, **characterised in that** a hot water displacement store (8.5) is provided between the hot water flow line (8.3) and the cold water return line (8.4).

6. Apparatus according to any one of the preceding Claims, **characterised in that** an additional steam line (8.1") leads into a preheater region (9.2.d") in the intermediate superheater (9.2), which region is adjoined by a(n) intermediate superheater region (9.2.a.d"), into which the waste steam line of an expansion machine leads.

7. Apparatus according to any one of the preceding Claims, **characterised in that** the intermediate superheater is constructed as a tubular heat exchanger, wherein the hot water is carried in the tubes (9.2.e) and the steam between the tubes and the casing (Figure 17).

8. Apparatus according to any one of the preceding Claims, **characterised in that** a portion of the cold water return line (8.4), which is located after the intermediate superheater (9.2), is a heat exchanger surface (3.12) for heating a water space of a steam drum or of a degasser (3.7).

9. Apparatus according to any of the preceding Claims, **characterised in that** a water control valve (3.16) is disposed in the cold water return line (8.4), which valve is activated by a temperature difference controller (3.17) to guarantee synchronism of the temperatures before the mixing point (3.6).

10. Method for converting energy by using heat from a hot fluid (2), wherein the heat in a heat exchanger (3), through which the hot fluid (2) flows, is transferred to a working medium flowing through a preheater heating surface and/or an economizer heating surface (3.3a, b), an evaporator heating surface (3.3c) as well as, optionally, a superheater heating surface (3.3d), and evaporates this, the resulting (main) steam is supplied to an energy converter (9) with one or more expansion engine(s) (9.1', 9.1"), where it is expanded, and the partially expanded steam is interheated at least once, wherein water is heated through heat transfer in the heat exchanger (3) for the intermediate heating and routed via a hot water system to an intermediate superheater (9.2) for transferring heat to the partially expanded steam, **characterised in that** the partially expanded steam is heated at a steam temperature which lies below the working medium temperature at the pinch point (temperature approximation fluid temperature - working medium temperature).

11. Method according to Claim 10, **characterised in that** heating is carried out up to a temperature which lies above the temperature of the waste steam of the last expansion machine before entry into a condenser (Figures 3, 5).

12. Method according to Claim 11, **characterised in that** heat from the hot water is continuously transferred from the intermediate superheater (9.2a) via heat exchanger surfaces to the expanding steam.

13. Method according to Claim 10 or 11, **characterised in that** this method is carried out as a saturated steam process in at least two expansion steps, and the steam is supplied after the first expansion step in the high-pressure expansion machine (9.1') to a water separator (9.7) before it is supplied via the intermediate heater (9.2.a) to the following expansion machine (9.1") for the second expansion step (Figure 11).

14. Method according to any one of Claims 10 to 13, **characterised in that** additional steam is generated in the heat exchanger via additional heating surfaces (3.3.b", 3.3.c") and supplied via an additional steam line (8.1") to the intermediate superheater (9.2.ad) for superheating and mixing with the main steam (Figures 12, 13, 14).

15. Method according to any one of Claims 10 to 14, **characterised in that** saturated additional steam is generated in the heat exchanger via additional heating surfaces (3.3.b", 3.3.c") and routed via an additional steam line (8.1") to an additional superheater (9.2.d), which is connected to the hot water system, and that the steam leaving the superheater is supplied to the energy converter before intermediate heating (Figure 13).

16. Method according to any one of Claims 10 to 15, **characterised in that** the water leaving the intermediate superheater (9.2) is supplied via the cold water return line to an apparatus for delivering the residual heat, such as, e.g. a heat exchanger surface (3.12) for heating the water space of a steam drum or a heat extractor (9.8), and then supplied to the heat exchanger again (Figures 8, 15).

17. Method according to any one of Claims 10 to 16, **characterised in that** the fluid is waste gas of an internal combustion engine (1.a) with evaporative cooling, wherein the low-pressure steam of the evaporative cooling is supplied to the intermediate superheater for superheating and mixing with the main steam (Figure 16).

## Revendications

1. Dispositif de conversion d'énergie avec utilisation de la chaleur d'un fluide chaud (2), comprenant : un échangeur thermique (3) traversé par le fluide chaud (2) et qui comporte une surface chauffante de préchauffeur et/ou d'économiseur et une surface chauffante d'évaporateur et le cas échéant une surface chauffante de surchauffeur (3.3.d), parcourues par de l'eau comme milieu de travail ; des conduites de vapeur (8.1) et d'eau d'alimentation (8.2) pour conduire la vapeur de l'échangeur thermique (3) à un convertisseur d'énergie (9) comportant une ou plusieurs machines d'expansion (9.1, 9.1', 9.1") et pour ramener à l'échangeur thermique (3) de la vapeur sortant du convertisseur d'énergie (9) ou selon le cas de l'eau condensée à partir de cette vapeur ; et au moins un resurchauffeur (9.2, 9.2a) pour surchauffer la vapeur non encore complètement détendue, dispositif dans lequel il est prévu un système de circuit d'eau chaude avec des conduites d'amenée d'eau chaude (8.3) et de retour d'eau froide (8.4) et avec une surface chauffante (3.3bce) du circuit d'eau chaude, agencée dans l'échangeur thermique (3), et le système de circuit d'eau chaude est relié au resurchauffeur (9.2, 9.2a) agencé en dehors de l'échangeur thermique (3), **caractérisé en ce que** la surface chauffante de préchauffeur et/ou d'économiseur, la surface chauffante d'évaporateur et la surface chauffante du circuit d'eau chaude sont constituées par une surface chauffante commune (3.3.bce) (figure 10).

2. Dispositif selon la revendication 1, **caractérisé en ce que** la surface chauffante commune (3.3.bce) est suivie par un ballon de séparation (3.28) qui est raccordé d'une part avec une machine d'expansion (9.1) par l'intermédiaire d'une conduite de vapeur (8.1), le cas échéant avec interposition de la surface chauffante de resurchauffeur (3.3.d), et d'autre part avec le resurchauffeur (9.2) par l'intermédiaire de la conduite d'amenée d'eau chaude (8.3).

3. Dispositif selon l'une des revendications précédentes, **caractérisé en ce que** la conduite de refoulement de la pompe d'eau d'alimentation (3.9) et la conduite de retour d'eau froide (8.4) qui véhiculent de préférence des quantités d'eau avec sensiblement même température, débouchent dans un collecteur d'entrée commun (3.2bce), qui est relié à la surface chauffante commune (3.3.bce).

4. Dispositif selon la revendication 3, **caractérisé en ce qu'**une soupape de régulation d'eau d'alimentation (3.14) est disposée dans la conduite d'eau d'alimentation (8.2) devant le collecteur d'entrée (3.2.be), pour maintenir constant le niveau d'eau dans le ballon de séparation (3.28).

5. Dispositif selon l'une des revendications précédentes, **caractérisé en ce qu'**il est prévu un accumulateur de refoulement d'eau chaude (8.5) entre la conduite d'amenée d'eau chaude (8.3) et la conduite de retour d'eau froide (8.4) (figure 11).

6. Dispositif selon l'une des revendications précédentes, **caractérisé en ce qu'**une conduite de vapeur additionnelle (8.1") débouche dans le resurchauffeur (9.2) dans une zone de préchauffage (9.2.d") à laquelle se raccorde une zone de (re)surchauffeur (9.2.a.d"), dans laquelle débouche la conduite d'échappement de vapeur d'une machine d'expansion.

7. Dispositif selon l'une des revendications précédentes, **caractérisé en ce que** le resurchauffeur est réalisé sous la forme d'un échangeur thermique tubulaire, où l'eau chaude passe dans les tubes (9.2.e) et la vapeur entre les tubes et la virole (figure 17).

8. Dispositif selon l'une des revendications précédentes, **caractérisé en ce qu'**une partie de la conduite de retour d'eau froide (8.4) se trouvant derrière le resurchauffeur (9.2) est une surface d'échangeur thermique (3.12) pour chauffer une chambre à eau d'un tambour à vapeur ou selon les cas d'un dégazeur (3.7).

9. Dispositif selon l'une des revendications précédentes, **caractérisé en ce qu'**une soupape de régulation d'eau (3.16) disposée dans la conduite de retour d'eau froide (8.4) est pilotée par un régulateur de différence de température (3.17) pour assurer la variation simultanée des températures devant le point de mélange (3.6).

10. Procédé de conversion d'énergie avec utilisation de la chaleur d'un fluide chaud (2), dans lequel : dans un échangeur thermique traversé par le fluide chaud (2) la chaleur est transmise à un milieu de travail parcourant une surface chauffante de préchauffeur et/ou d'économiseur (3.3a, b), une surface chauffante d'évaporateur (3.3c) ainsi que le cas échéant une surface chauffante de surchauffeur (3.3d), et vaporise ce milieu de travail ; la vapeur (principale) ainsi obtenue est envoyée, pour y être détendue, à un convertisseur d'énergie (9) comportant une ou plusieurs machines d'expansion (9.1, 9.1") ; et la vapeur partiellement détendue est réchauffée au moins une fois ; et dans lequel pour le réchauffage l'eau est chauffée par transfert thermique dans l'échangeur thermique (3) et conduite par un système d'eau chaude à un resurchauffeur (9.2) pour céder de la chaleur à la vapeur partiellement détendue, **caractérisé en ce que** le chauffage de la vapeur partiellement détendue est effectué à une température de vapeur qui est inférieure à la température du milieu de travail au pinch-point (similitude de température du fluide - température du milieu travail).

11. Procédé selon la revendication 10, **caractérisé en ce qu'**on conduit le chauffage jusqu'à une température supérieure à la température de la vapeur d'échappement de la dernière machine d'expansion avant l'entrée dans un condenseur (figures 3, 5).

12. Procédé selon la revendication 11, **caractérisé en ce que** le resurchauffeur (9.2a) transmet de façon continue de la chaleur de l'eau chaude à de la vapeur en cours de détente, par l'intermédiaire de surfaces d'échange thermique.

13. Procédé selon la revendication 10 ou 11, **caractérisé en ce qu'**on met en oeuvre ce procédé sous la forme d'un processus à vapeur saturée dans au moins deux étapes de détente, et après la première étape de détente dans la machine d'expansion à haute pression (9.1') la vapeur est conduite à un séparateur d'eau (9.7) avant d'être conduite par l'intermédiaire du réchauffeur (9.2.a) à la machine d'expansion suivante (9.1") pour la seconde étape de détente (figure 11).

14. Procédé selon l'une des revendications 10 à 13, **caractérisé en ce qu'**on produit de la vapeur additionnelle par l'intermédiaire de surfaces chauffantes additionnelles (3.3.b", 3.3.3c") dans l'échangeur thermique, et on conduit la vapeur additionnelle au resurchauffeur (9.2.ad) par l'intermédiaire d'une conduite de vapeur additionnelle (8.1") pour surchauffage et mélange avec la vapeur principale (Figures 12, 13, 14).

15. Procédé selon l'une des revendications 10 à 14, **caractérisé en ce qu'**on produit de la vapeur additionnelle saturée par l'intermédiaire de surfaces chauffantes additionnelles (3.3.d", 3.3.c") dans l'échangeur de chaleur, et on conduit par l'intermédiaire d'une conduite de vapeur additionnelle (8.1") cette vapeur additionnelle à un surchauffeur additionnel (9.2.d) raccordé au système d'eau chaude, et **en ce que** la vapeur qui en ressort est conduite au convertisseur d'énergie en avant du réchauffage (figure 13).

16. Procédé selon l'une des revendications 10 à 15, **caractérisé en ce qu'**on amène l'eau sortant du resurchauffeur (9.2), par l'intermédiaire de la conduite de retour d'eau froide, à un dispositif pour céder la chaleur restante comme par exemple à une surface d'échangeur thermique (3.12) pour chauffer la chambre à eau d'un tambour à vapeur ou à un découpleur thermique (9.8), puis on la ramène à l'échangeur thermique (figure 8, 15).

17. Procédé selon l'une des revendications 10 à 16, **caractérisé en ce que** le fluide est un gaz d'échappement d'un moteur à combustion (1.a) refroidi par évaporation, procédé dans lequel on envoie la vapeur à basse pression du refroidissement par évaporation au resurchauffeur pour surchauffe et mélange avec la vapeur principale (figure 16).
